# EUROPEAN PATENT APPLICATION

(11) **EP 4 706 863 A1**
(43) Date of publication of application: **11.03.2026**
(21) Application number: 24929795.3
(22) Date of filing: 12.03.2024
(51) Int. Cl.: B23K 26/00, B23K 31/00

(54) **MACHINING PATH GENERATION METHOD, LASER MACHINING SYSTEM, PROGRAM, AND LASER MACHINING METHOD**

(71) Applicant: Yamazaki Mazak Corporation, Niwa-gun, Aichi 480-0197 (JP)
(72) Inventor: KATAYAMA, Takuro, Niwa-gun, Aichi 480-0197 (JP); SAKAI, Yoshihiko, Niwa-gun, Aichi 480-0197 (JP); KOIKE, Shunsuke, Niwa-gun, Aichi 480-0197 (JP); IIDA, Shuto, Niwa-gun, Aichi 480-0197 (JP); MILEVICH, Alexander, Niwa-gun, Aichi 480-0197 (JP)
(74) Representative: TBK
(86) International application number: PCT/JP2024/009567
(87) International publication number: WO 2025/191688

(57) **Abstract**

A machining path generation method includes: preparing a plurality of models including a first model obtained by modeling a first elongated member and a second model obtained by modeling a second elongated member; determining a first shape as a first positioning shape between the first elongated member and the second elongated member at a first welding portion defined as a portion where the first elongated member and the second elongated member are to be welded; determining a first value indicating a first shrinkage amount of the first elongated member as a result of the welding at the first welding portion; creating a first machining path generation model from the first model by correcting a shape of the first model based at least on the first shape and the first value; and generating a first machining path for producing the first elongated member based on the first machining path generation model.

## Description

### Technical Field

The present invention relates to a machining path generation method, a laser beam machining system, a program, and a laser beam machining method.

### Background Art

There have been known techniques of using a positioning jig for positioning a first member with a second member when welding the first member to the second member.

Example related techniques include a positioning jig disclosed in Patent Literature 1. The positioning jig described in Patent Literature 1 includes a beam setting portion where a joist is set, a receiving metal fitting setting portion where a receiving metal fitting is set, a guide portion for guiding the receiving metal fitting in the longitudinal direction of the joist, a positioning member including a plurality of positioning pins for positioning the receiving metal fitting setting portion in the longitudinal direction of the joist, and an attachment pin to which the positioning member is detachably attached.

### Citation List

### Patent Literature

PTL1: JP 2020-172798 A.

### Summary of Invention

### Technical Problem

An object of the present invention is to provide a machining path generation method, a laser beam machining system, a program, and a laser beam machining method such that the machining path generation method, the laser beam machining system, the program, and the laser beam machining method enable generation of a machining path for producing an elongated member while taking a welding shrinkage amount into consideration. Another object of the present invention is to provide a machining path generation method, a laser beam machining system, a program, and a laser beam machining method such that the machining path generation method, the laser beam machining system, the program, and the laser beam machining method enable generation of a machining path for producing an elongated member that can be easily positioned with another elongated member.

### Solution to Problem

A machining path generation method according to some embodiments includes preparing a plurality of models including a first model obtained by modeling a first elongated member and a second model obtained by modeling a second elongated member, determining a first shape as a first positioning shape between the first elongated member and the second elongated member at a first welding portion defined as a portion where the first elongated member and the second elongated member are to be welded, determining a first value indicating a first shrinkage amount of the first elongated member as a result of the welding at the first welding portion, creating a first machining path generation model from the first model by correcting a shape of the first model based at least on the first shape and the first value, and generating a first machining path for producing the first elongated member based on the first machining path generation model.

A laser beam machining system according to some embodiments includes a machining path generator configured to execute preparation processing of preparing a plurality of models including a first model obtained by modeling a first elongated member and a second model obtained by modeling a second elongated member, first determination processing of determining a first shape as a first positioning shape between the first elongated member and the second elongated member at a first welding portion defined as a portion where the first elongated member and the second elongated member are to be welded, second determination processing of determining a first value indicating a first shrinkage amount of the first elongated member as a result of the welding at the first welding portion, first creation processing of creating a first machining path generation model from the first model by correcting a shape of the first model based at least on the first shape and the first value, and first generation processing of generating a first machining path for producing the first elongated member based on the first machining path generation model, a controller configured to generate a control command by executing a machining program created based at least on the first machining path and transmit the generated control command to a laser beam machine, and the laser beam machine configured to operate based on the control command to produce the first elongated member from a first elongated workpiece by irradiating the first elongated workpiece with a laser beam.

A program according to some embodiments is a program for causing a machining path generator or a laser beam machining system to execute the machining path generation method described above.

A laser beam machining method according to some embodiments includes preparing a plurality of models including a first model obtained by modeling a first elongated member and a second model obtained by modeling a second elongated member, determining a first shape as a first positioning shape between the first elongated member and the second elongated member at a first welding portion defined as a portion where the first elongated member and the second elongated member are to be welded, determining a first value indicating a first shrinkage amount of the first elongated member as a result of the welding at the first welding portion, creating a first machining path generation model from the first model by correcting a shape of the first model based at least on the first shape and the first value, generating a first machining path for producing the first elongated member based on the first machining path generation model, creating a machining program based at least on the first machining path, generating a control command by a controller that executes the machining program, and producing the first elongated member from a first elongated workpiece by irradiating the first elongated workpiece with a laser beam by a laser beam machine that receives the control command.

### Effects of Invention

The present invention can provide a machining path generation method, a laser beam machining system, a program, and a laser beam machining method that enable generation of a machining path for producing an elongated member while taking a welding shrinkage amount into consideration. Furthermore, the present invention can provide a machining path generation method, a laser beam machining system, a program, and a laser beam machining method such that the machining path generation method, the laser beam machining system, the program, and the laser beam machining method enable generation of a machining path for producing an elongated member that can be easily positioned with another elongated member.

### Brief Description of Drawings

[FIG. 1] FIG. 1 is a diagram schematically illustrating a laser beam machining system according to embodiment 1.
[FIG. 2] FIG. 2 is a diagram schematically illustrating how a machining path generator receives shape data of a plurality of models from a CAD device.
[FIG. 3] FIG. 3 is a schematic perspective view schematically illustrating an example of a first elongated member, a second elongated member, and a third elongated member.
[FIG. 4] FIG. 4 is a diagram schematically illustrating an example of the machining path generator.
[FIG. 5] FIG. 5 is a diagram schematically illustrating the example of the machining path generator.
[FIG. 6] FIG. 6 is an enlarged view of a part in FIG. 5.
[FIG. 7] FIG. 7 is a diagram schematically illustrating an example of the machining path generator.
[FIG. 8] FIG. 8 is a diagram schematically illustrating the laser beam machining system according to embodiment 1.
[FIG. 9] FIG. 9 is a diagram illustrating an example of an image displayed on a display.
[FIG. 10] FIG. 10 is a diagram illustrating an example of an image displayed on the display.
[FIG. 11] FIG. 11 is a diagram illustrating an example of an image displayed on the display.
[FIG. 12] FIG. 12 is a diagram schematically illustrating a state in which a first machining path generation model and a second machining path generation model are positioned.
[FIG. 13] FIG. 13 is a diagram illustrating an example of an image displayed on the display.
[FIG. 14] FIG. 14 is a diagram illustrating an example of an image displayed on the display.
[FIG. 15] FIG. 15 is a diagram illustrating an example of an image displayed on the display.
[FIG. 16] FIG. 16 is a diagram illustrating an example of an image displayed on the display.
[FIG. 17] FIG. 17 is a diagram illustrating an example of an image displayed on the display.
[FIG. 18] FIG. 18 is a diagram illustrating an example of an image displayed on the display.
[FIG. 19] FIG. 19 is a diagram illustrating an example of an image displayed on the display.
[FIG. 20] FIG. 20 is a diagram illustrating an example of an image displayed on the display.
[FIG. 21] FIG. 21 is a diagram illustrating an example of an image displayed on the display.
[FIG. 22] FIG. 22 is a diagram schematically illustrating an example the machining path generator.
[FIG. 23] FIG. 23 is a diagram schematically illustrating the laser beam machining system according to embodiment 1.
[FIG. 24] FIG. 24 is a diagram schematically illustrating the laser beam machining system according to embodiment 1.
[FIG. 25] FIG. 25 is a flowchart illustrating an example of a laser beam machining method according to embodiment 2.
[FIG. 26] FIG. 26 is a diagram schematically illustrating an example of a non-volatile storage medium that records a program.
[FIG. 27] FIG. 27 is a diagram schematically illustrating an example of a plurality of elongated members produced using the laser beam machining system according to embodiment 1 or the laser beam machining method according to embodiment 2.
[FIG. 28] FIG. 28 is a diagram schematically illustrating an example of a plurality of elongated members produced using the laser beam machining system according to embodiment 1 or the laser beam machining method according to embodiment 2.
[FIG. 29] FIG. 29 is a diagram schematically illustrating an example of the machining path generator.
[FIG. 30] FIG. 30 is a diagram schematically illustrating an example of the machining path generator.

### Description of Embodiments

A machining path generation method, a laser beam machining system 100, a program P, and a laser beam machining method according to embodiments will now be described with reference to the accompanying drawings. In the description of the embodiments, portions and members having the same functions are denoted by the same reference numerals, and the redundant description on the portions and the members denoted by the same reference numerals will be omitted.

### (Embodiment 1)

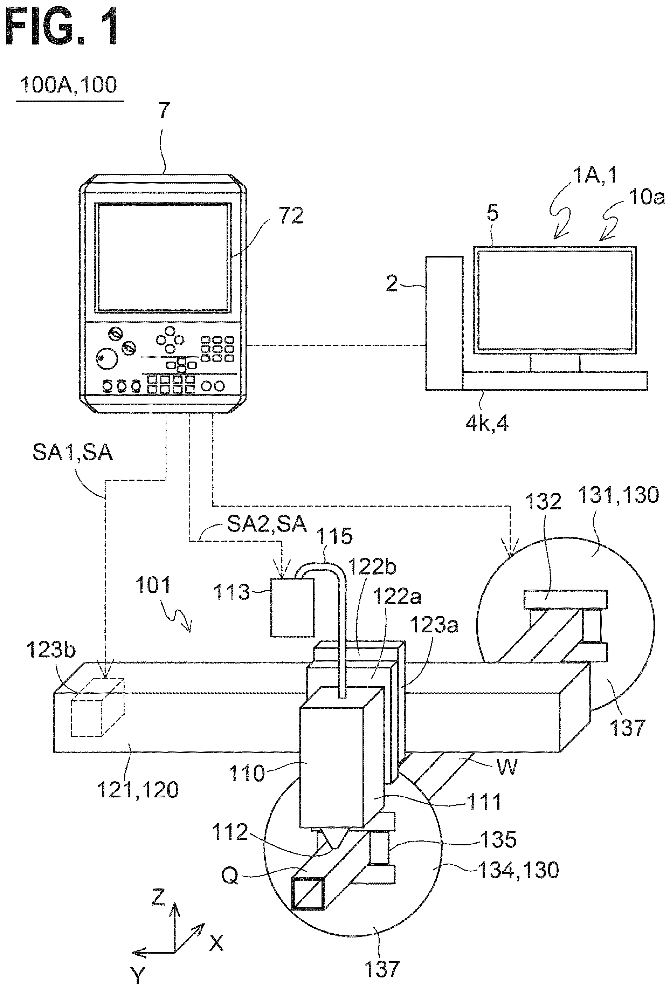

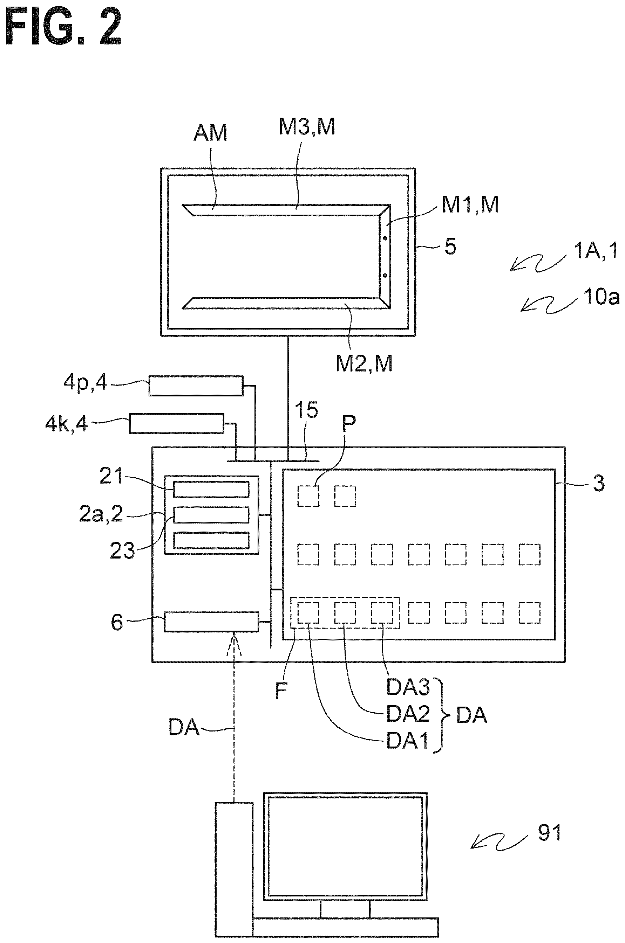

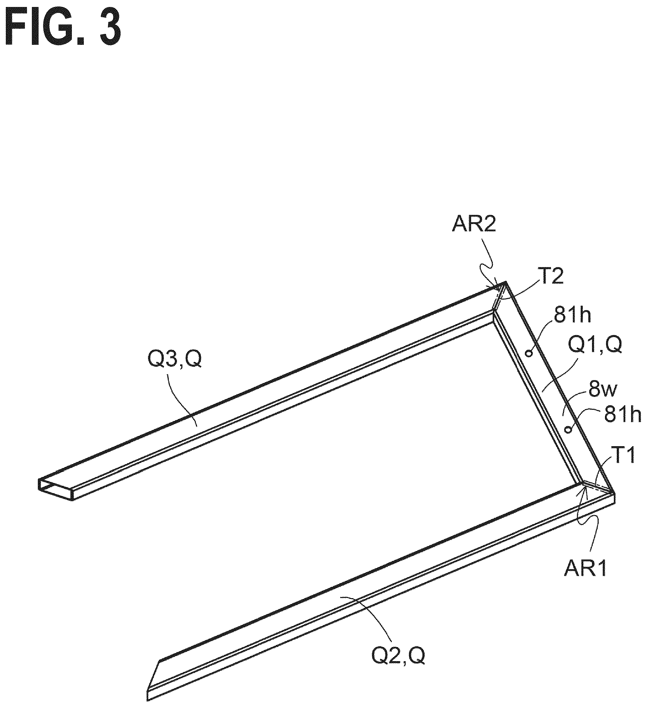

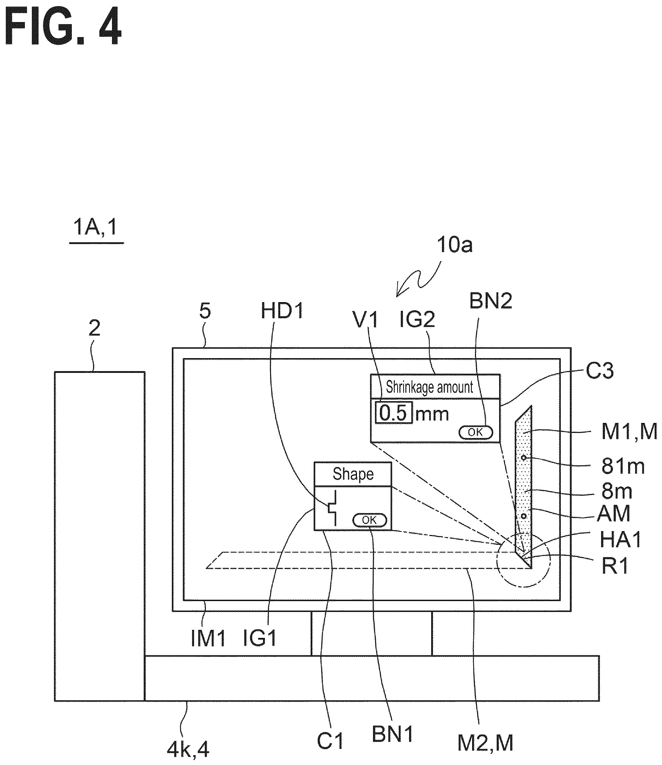

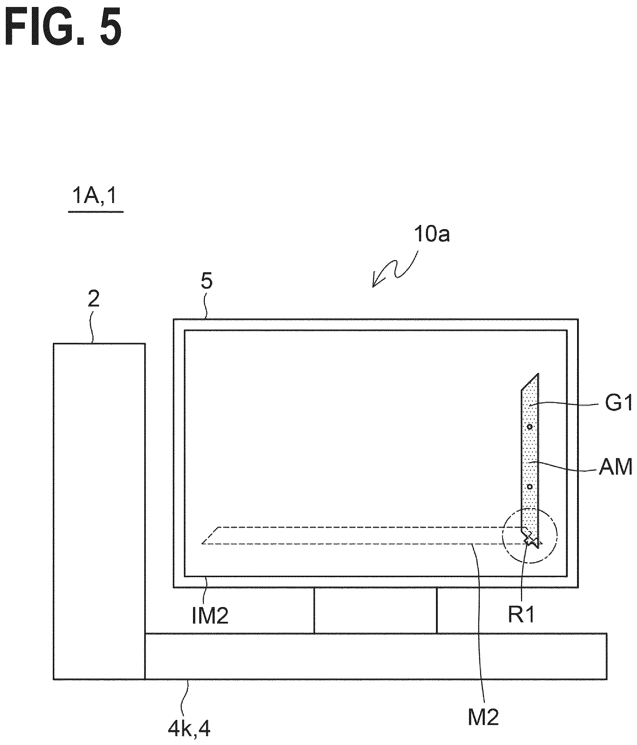

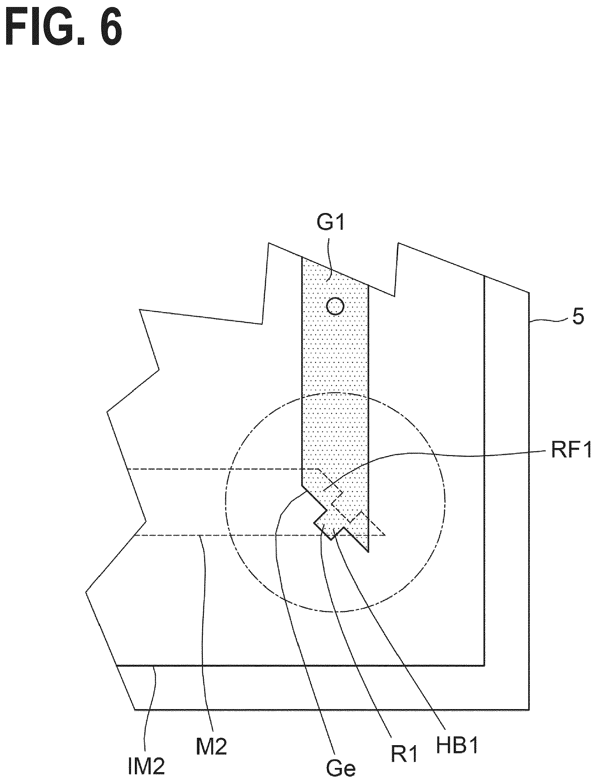

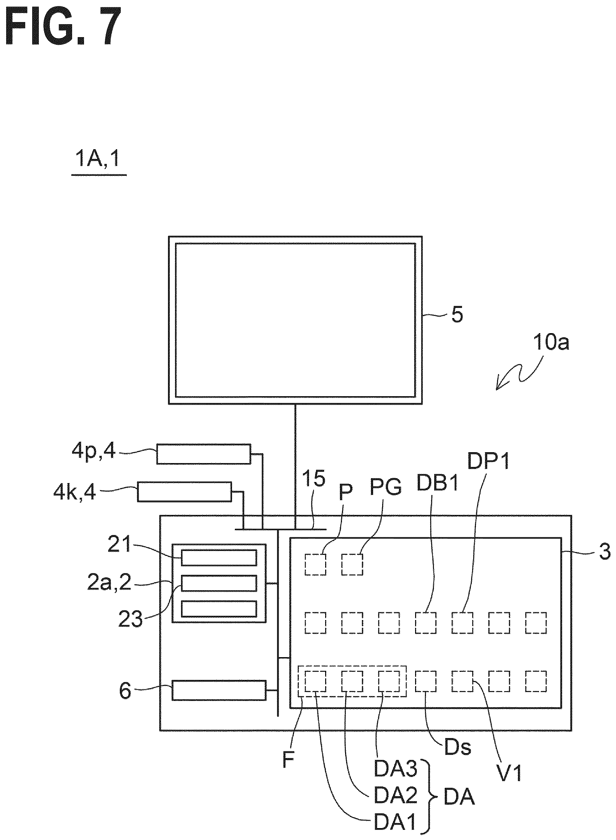

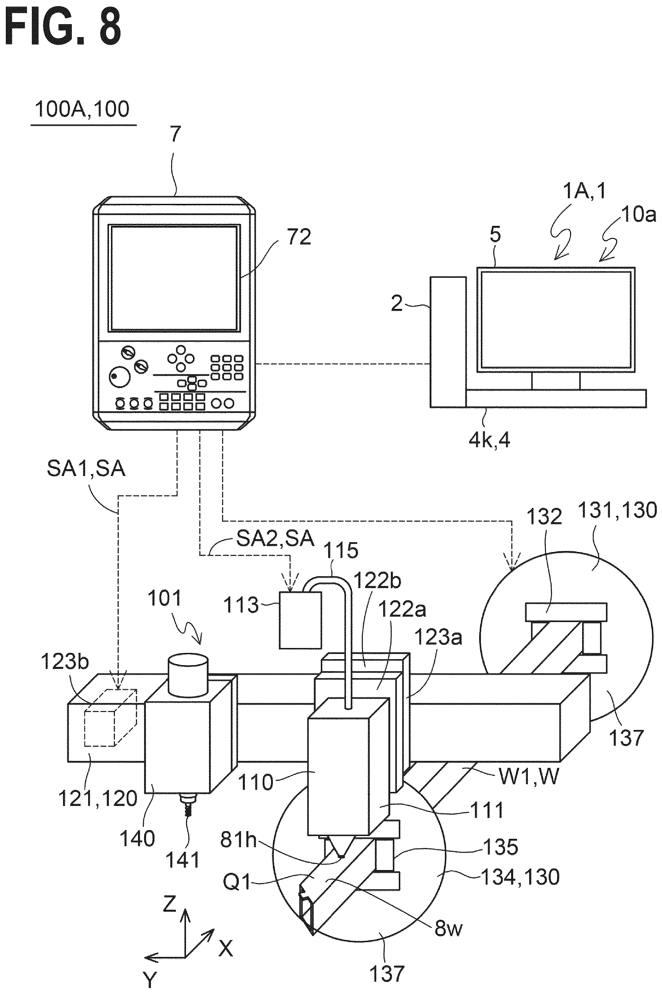

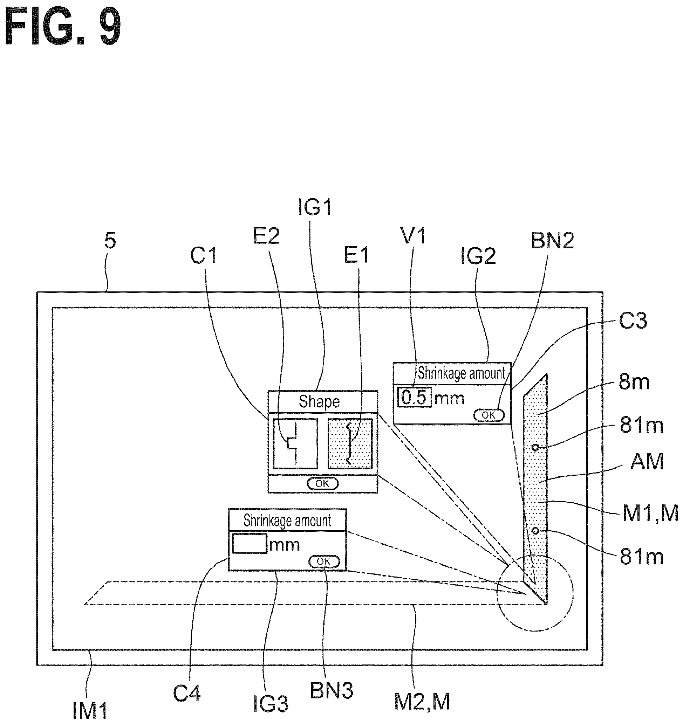

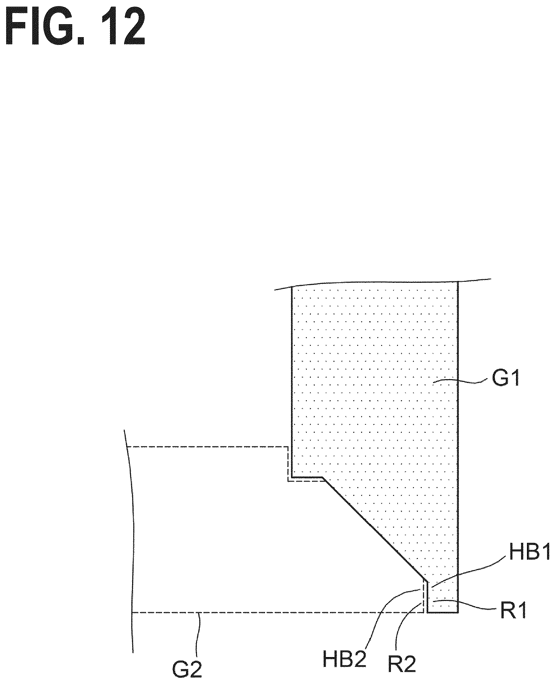

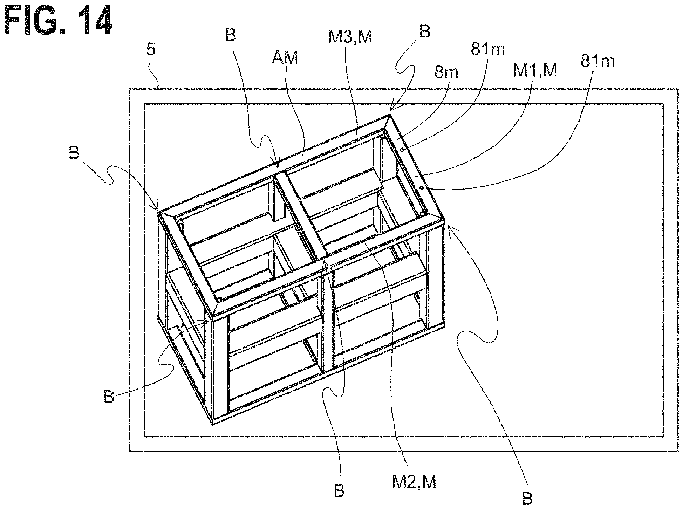

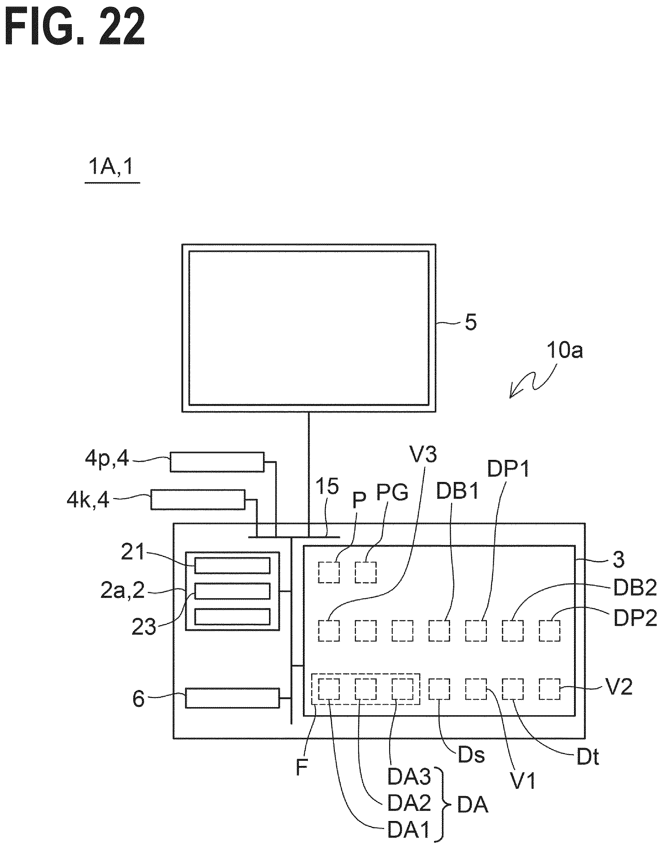

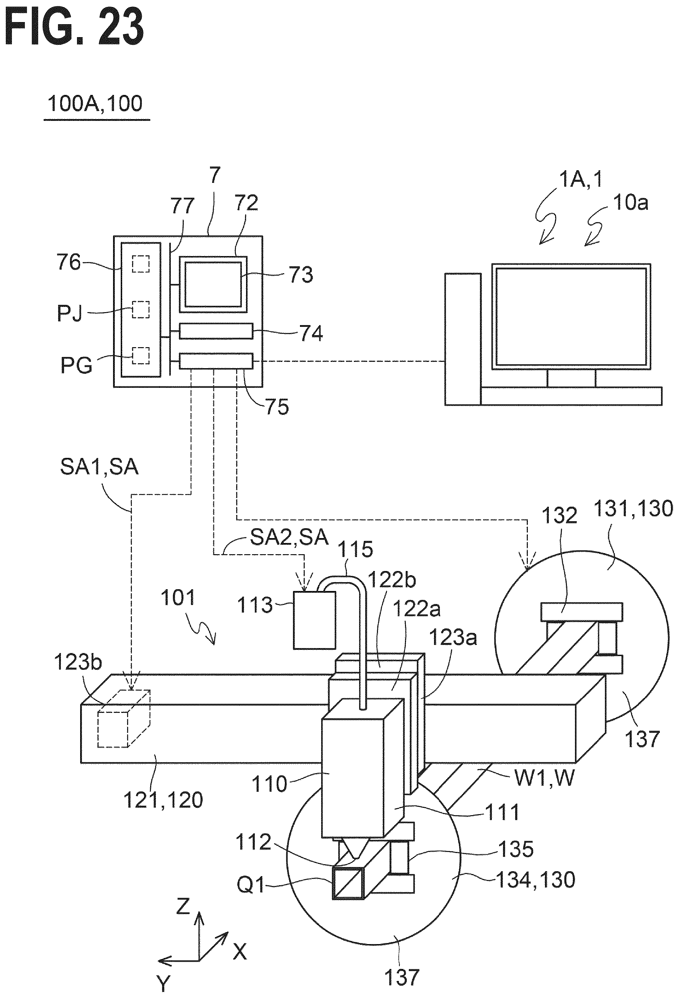

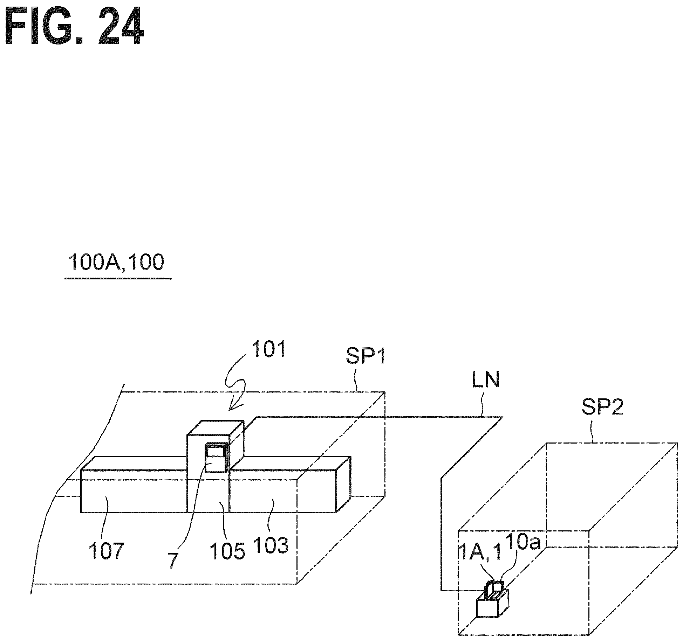

A laser beam machining system 100A according to embodiment 1 will be described with reference to FIG. 1 to FIG. 24. FIG. 1 is a diagram schematically illustrating the laser beam machining system 100A according to embodiment 1. FIG. 2 is a diagram schematically illustrating how a machining path generator 1A receives shape data DA of a plurality of models M from a CAD device 91. FIG. 3 is a schematic perspective view schematically illustrating an example of a first elongated member Q1, a second elongated member Q2, and a third elongated member Q3. FIG. 4 and FIG. 5 are diagrams schematically illustrating an example of the machining path generator 1A. FIG. 6 is an enlarged view of a part in FIG. 5. FIG. 7 is a diagram schematically illustrating an example of the machining path generator 1A. FIG. 8 is a diagram schematically illustrating the laser beam machining system 100A according to embodiment 1. FIG. 9, FIG. 10, FIG. 11, and FIG. 13 are diagrams illustrating examples of an image displayed on a display 5. FIG. 12 is a diagram schematically illustrating a state in which a first machining path generation model G1 and a second machining path generation model G2 are positioned. FIG. 14 to FIG. 21 are diagrams illustrating examples of an image displayed on the display 5. FIG. 22 is a diagram schematically illustrating an example the machining path generator 1A. FIG. 23 is a diagram schematically illustrating the laser beam machining system 100A according to embodiment 1. FIG. 24 is a diagram schematically illustrating the laser beam machining system 100A according to embodiment 1.

As in the example illustrated in FIG. 1, the laser beam machining system 100A includes the machining path generator 1A, a controller 7, and a laser beam machine 101.

The machining path generator 1A generates a machining path for producing an elongated member Q from an elongated workpiece W. In this specification, the machining path means a path of a laser beam or a tool for machining the elongated workpiece W.

The controller 7 executes a machining program created based on the machining path, to generate a control command SA, and transmits the generated control command SA to the laser beam machine 101.

The laser beam machine 101 operates based on the control command SA, and irradiates the elongated workpiece W with a laser beam, to produce the elongated member Q from the elongated workpiece W.

In the example illustrated in FIG. 2, the machining path generator 1A (for example, a CAD/CAM device 10a) includes a calculator 2, a memory 3, an inputter 4, the display 5, and a communication circuit 6. The inputter 4 may include a keyboard 4k, may include a pointer 4p such as a mouse, or may include a touch panel that is a display with a touch panel.

FIG. 3 illustrates an example of the first elongated member Q1, the second elongated member Q2, and the third elongated member Q3. The machining path generator 1A executes processing (hereinafter, referred to as "preparation processing") for preparing a plurality of models M including a first model M1 (see FIG. 2) obtained by modeling the first elongated member Q1 and a second model M2 (see FIG. 2) obtained by modeling the second elongated member Q2.

The first model M1 has a shape corresponding to the basic shape of the first elongated member Q1. In other words, the first model M1 is a shape model of the first elongated member Q1. The second model M2 has a shape corresponding to the basic shape of the second elongated member Q2. In other words, the second model M2 is a shape model of the second elongated member Q2. The plurality of models M prepared by the preparation processing may include a third model M3 obtained by modeling the third elongated member Q3. The third model M3 has a shape corresponding to the basic shape of the third elongated member Q3. In other words, the third model M3 is a shape model of the third elongated member Q3.

FIG. 2 illustrates a state in which the plurality of models M prepared by the preparation processing are displayed on the display 5.

The preparation processing includes, for example, reading, by the calculator 2, the shape data DA of the plurality of models M. More specifically, the preparation processing includes reading, by the calculator 2, which executes the program P stored in the memory 3, a file F including the shape data DA of the plurality of models M from the memory 3. Alternatively or additionally, the preparation processing may include displaying, by the calculator 2, the plurality of models M on the display 5 as in an example illustrated in FIG. 2. Alternatively or additionally, the preparation processing may include creating the plurality of models M using software (CAD software, for example) executed by the calculator 2.

The shape data DA of the plurality of models M includes shape data DA1 of the first model M1 and shape data DA2 of the second model M2. Additionally, the shape data DA of the plurality of models M may include shape data DA3 of the third model M3.

In the example illustrated in FIG. 2, the shape data DA of the plurality of models M (more specifically, the shape data DA1 of the first model M1, the shape data DA2 of the second model M2, and the shape data of the third model M3) is stored in the memory 3.

The shape data DA of the plurality of models M may be created by the CAD device 91 different from the machining path generator 1A. In this case, the machining path generator 1A receives the shape data DA of the plurality of models M from the CAD device 91. The machining path generator 1A stores the received shape data DA of the plurality of models M in the memory 3. Alternatively, the machining path generator 1A may receive the shape data DA of the plurality of models M from a portable memory such as a USB memory, and store the received shape data DA of the plurality of models M in the memory 3.

Alternatively, the shape data DA of the plurality of models M may be created by the machining path generator 1A. For example, the plurality of models M may be created using software (for example, CAD software) executed by the calculator 2. The created shape data DA of the plurality of models M is stored in the memory 3.

As in an example illustrated in FIG. 3, a portion (see a portion defined by the one-dot chain line indicated by an arrow AR1) where the first elongated member Q1 and the second elongated member Q2 are to be welded is defined as a first welding portion T1. A portion (see a portion defined by the one-dot chain line indicated by an arrow AR2) where the first elongated member Q1 and the third elongated member Q3 are to be welded is defined as a second welding portion T2.

As in an example illustrated in FIG. 4, the machining path generator 1A executes processing (hereinafter, referred to as "first determination processing") for determining a first shape HD1 as a positioning shape (hereinafter, referred to as "first positioning shape") between the first elongated member Q1 and the second elongated member Q2 in the first welding portion T1. In the example illustrated in FIG. 4, the first shape HD1 is displayed on the display 5. In the example illustrated in FIG. 4, upon approval of the first shape HD1 through an operation on the inputter 4 (for example, upon clicking of a first button BN1 displayed on the display 5 using a pointer such as a mouse), the machining path generator 1A (more specifically, the calculator 2) determines the first shape HD1 as the first positioning shape between the first elongated member Q1 and the second elongated member Q2 in the first welding portion T1. Upon determination of the first shape HD1, the calculator 2 stores shape identification data Ds identifying the first shape HD1 in the memory 3 (see FIG. 7).

Alternatively, the calculator 2 may automatically determine the first shape HD1. For example, the first determination processing may include automatically determining the first shape HD1 by the calculator 2 based on the shape of the first model M1, the shape of the second model M2, and the arrangement relationship between the first model M1 and the second model M2.

As in the example illustrated in FIG. 4, the machining path generator 1A executes processing (hereinafter, referred to as "second determination processing") of determining a first value V1 indicating a shrinkage amount (hereinafter, referred to as "first shrinkage amount") of the first elongated member Q1 as a result of the welding in the first welding portion T1. In the example illustrated in FIG. 4, the first value V1 is displayed on the display 5. The first value V1 is, for example, a value input or selected on the inputter 4. In the example illustrated in FIG. 4, upon approval of the first value V1 through an operation on the inputter 4 (for example, upon clicking of a second button BN2 displayed on the display 5 using a pointer such as a mouse), the machining path generator 1A (more specifically, the calculator 2) determines the first value V1 indicating the first shrinkage amount of the first elongated member Q1 as a result of the welding in the first welding portion T1. Upon determination of the first value V1, the calculator 2 stores the first value V1 in the memory 3 (see FIG. 7).

Alternatively, the calculator 2 may automatically determine the first value V1. For example, the second determination processing may include automatically determining, by the calculator 2, the first value V1 indicating the first shrinkage amount of the first elongated member Q1 as a result of the welding in the first welding portion T1, based on the dimensions of the first model M1 and/or the material of the first elongated member Q1. The second determination processing may include automatically determining, by the calculator 2, the first value V1 indicating the first shrinkage amount of the first elongated member Q1 as a result of the welding in the first welding portion T1, based on data on the first elongated member Q1 (for example, the dimensions of the first model M1 obtained by modeling the first elongated member Q1 and the material of the first elongated member Q1) and welding conditions (for example, welding length, leg length of the welding portion, continuous welding or intermittent welding, the welding material, and welding method (such as, for example, arch welding or laser beam welding)).

The machining path generator 1A executes processing (hereinafter, referred to as "first creation processing") of creating the first machining path generation model G1 (see FIG. 5) from the first model M1 (see FIG. 4) by correcting the shape of the first model M1 based at least on the first shape HD1 and the first value V1. Upon creation of the first machining path generation model G1, the calculator 2 stores shape data DB1 of the first machining path generation model G1 in the memory 3 (see FIG. 7).

In the example illustrated in FIG. 4 and FIG. 5, the first creation processing includes creating the first machining path generation model G1 (see FIG. 5) from the first model M1 (see FIG. 4) by executing processing including increasing the length of the first model M1 based at least on the first value V1.

In the example illustrated in FIG. 4 and FIG. 5, the first creation processing includes creating the first machining path generation model G1 (see FIG. 5) from the first model M1 (see FIG. 4) by executing processing including correcting the shape of a portion (hereinafter, referred to as "first portion R1") of the first model M1 corresponding to the first welding portion T1 into a shape conforming to the first shape HD1, based at least on the first shape HD1. The shape conforming to the first shape HD1 means a shape matching the first shape HD1, or a shape similar to the first shape HD1 (for example, a shape as a result of minor correction on the first shape HD1 to guarantee play between the first elongated member Q1 and the second elongated member Q2).

The machining path generator 1A executes processing (hereinafter, referred to as "first generation processing") for generating a first machining path for producing the first elongated member Q1 based on the first machining path generation model G1. The first machining path means a path of a laser beam or a tool for machining the first elongated workpiece W1 to produce the first elongated member Q1 from the first elongated workpiece W1 (for example, a path of a laser head 111 moving relative to the first elongated workpiece W1 to produce the first elongated member Q1 from the first elongated workpiece W1). As in an example illustrated in FIG. 8, when the laser beam machine 101 includes a machining head 140 holding a tool such as a machining tool 141, the first machining path may include both a path of the laser beam for machining the first elongated workpiece W1 and a path of the tool such as the machining tool 141 for machining the first elongated workpiece W1. The calculator 2 stores first machining path data DP1 indicating the generated first machining path in the memory 3 (see FIG. 7).

The machining path generator 1A or the controller 7 creates a machining program PG based at least on the first machining path. The controller 7 executes the machining program PG to generate the control command SA. The controller 7 transmits the generated control command SA to the laser beam machine 101 (see FIG. 8).

The laser beam machine 101 operates based on the control command SA, and irradiates the first elongated workpiece W1 with a laser beam to produce the first elongated member Q1 from the first elongated workpiece W1.

When the first elongated member Q1 and the second elongated member Q2 are welded in the first welding portion T1, the length of each of the first elongated member Q1 and the second elongated member Q2 is reduced from the original length. In other words, the length of the first elongated member Q1 is reduced due to welding shrinkage in the first welding portion T1. The length of the second elongated member Q2 is reduced due to welding shrinkage in the first welding portion T1.

In the laser beam machining system 100A according to embodiment 1, the first machining path generation model G1 is created with the welding shrinkage taken into consideration, and the first machining path is generated based on the first machining path generation model G1. The machining program PG is created based at least on the first machining path. Thus, when the first elongated member Q1 produced by the laser beam machine 101 based on the machining program PG is welded to the second elongated member Q2, the length of the first elongated member Q1 is reduced from an excessive length to a moderate length due to the welding shrinkage in the first welding portion T1. Thus, an assembly with a desired shape is produced based on a procedure including welding the first elongated member Q1 and the second elongated member Q2 in the first welding portion T1.

In the laser beam machining system 100A according to embodiment 1, the first machining path generation model G1 is created from the first model M1 by correcting the first model M1 based on the first shape HD1 as the first positioning shape, and the first machining path is generated based on the first machining path generation model G1. Thus, the first elongated member Q1 produced by the laser beam machine 101 can be easily positioned with the second elongated member Q2. Thus, a positioning jig for welding can be omitted or the number of positioning jigs can be reduced.

### (Optional Configurations)

Next, optional configurations that can be adopted for the laser beam machining system 100A according to embodiment 1 will be described with reference to FIG. 1 to FIG. 24.

### (Machining Path Generator 1A)

The machining path generator 1A includes at least one computer. The machining path generator 1A may include the CAD/CAM device 10a. Note that CAD is an abbreviation for "computer aided design" and CAM is an abbreviation for "computer aided manufacturing". The CAD/CAM device 10a is capable of generating a parts drawing, and of generating a machining path (for example, the first machining path) based on the generated parts drawing.

In the example illustrated in FIG. 2, the machining path generator 1A (for example, the CAD/CAM device 10a) includes the calculator 2, the memory 3, the inputter 4, the display 5, and the communication circuit 6.

The calculator 2 includes at least one processor 2a (for example, at least one CPU). In the example illustrated in FIG. 2, the machining path generator 1A (more specifically, the calculator 2) executes the program P stored in the memory 3 to cause the calculator 2 to function as a machining path generation model creation unit 21 and a machining path generation unit 23.

The memory 3 is a storage medium readable by the calculator 2. The memory 3 may be, for example, a non-volatile or volatile semiconductor memory such as a RAM, a ROM, or a flash memory, may be a magnetic disk, or may be a memory of another format. The memory 3 stores the program P and data.

The memory 3 may be dispersedly arranged at a plurality of locations. For example, a memory storing data and a memory storing the program P may be separately provided. The memory 3 may include a cloud storage accessible over a network.

The inputter 4 may include the keyboard 4k, may include the pointer 4p such as a mouse, and may include other devices (a touch panel on the display 5, for example).

In the example illustrated in FIG. 2, the calculator 2, the memory 3, the inputter 4, the display 5, and the communication circuit 6 are connected to each other via a bus 15.

In the example illustrated in FIG. 1, the machining path generator 1A is a device different from the controller 7. Alternatively, the controller 7 may function as the machining path generator 1A. Still alternatively, the CAD/CAM device 10a and the controller 7 may cooperate to function as the machining path generator 1A, and the CAD/CAM device 10a and the CAD device 91 may cooperate to function as the machining path generator 1A. The CAD/CAM device 10a, the controller 7, and the CAD device 91 may cooperate to function as the machining path generator 1A.

### (Correction of Shape of First Model M1)

In the example illustrated in FIG. 4 and FIG. 6, correcting the shape of the first model M1 includes (1) deforming the shape of the first portion R1 (in other words, the portion of the first model M1 corresponding to the first welding portion T1) into a shape HB1 (see FIG. 6) conforming to the first shape HD1, and (2) increasing the length of the first model M1 based at least on the first value V1.

In other words, the above-described first creation processing includes deforming the shape of the first portion R1 from an original shape HA1 (see FIG. 4) into the shape HB1 (see FIG. 6) conforming to the first shape HD1, and increasing the length of the first model M1 based at least on the first value V1 to create the first machining path generation model G1 from the first model M1.

More specifically, increasing the length of the first model M1 based at least on the first value V1 includes increasing the length of the first model M1 by at least the first value V1. When the first welding portion T1 is the only welding portion in the first elongated member Q1, increasing the length of the first model M1 based at least on the first value V1 includes increasing the length of the first model M1 by the first value V1. As will be described later, when the first welding portion T1 and the second welding portion T2 are welding portions in the first elongated member Q1, increasing the length of the first model M1 based at least on the first value V1 includes increasing the length of the first model M1 by a sum of the first value V1 and a later-described third value V3.

### (First Image IM1)

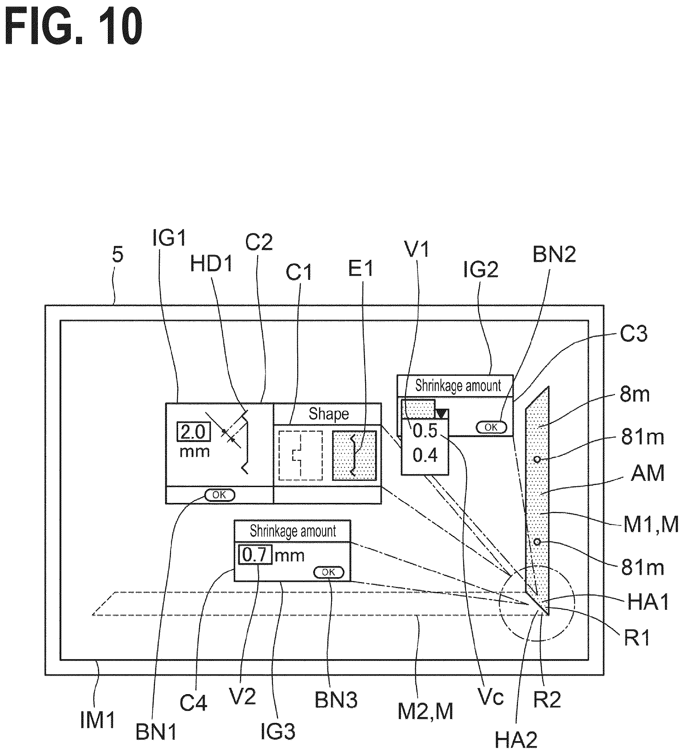

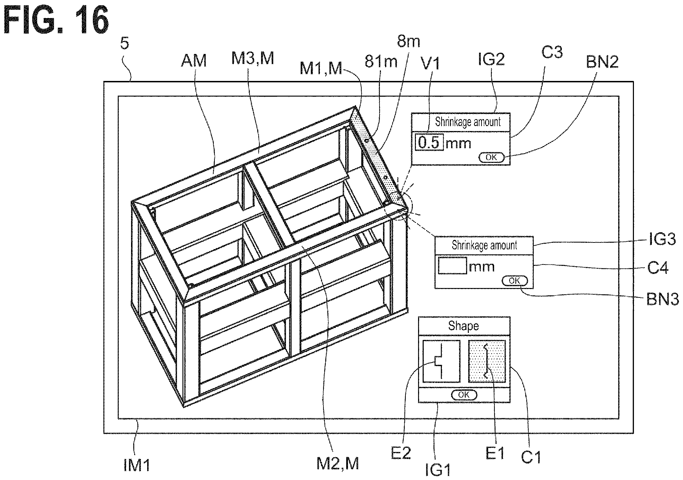

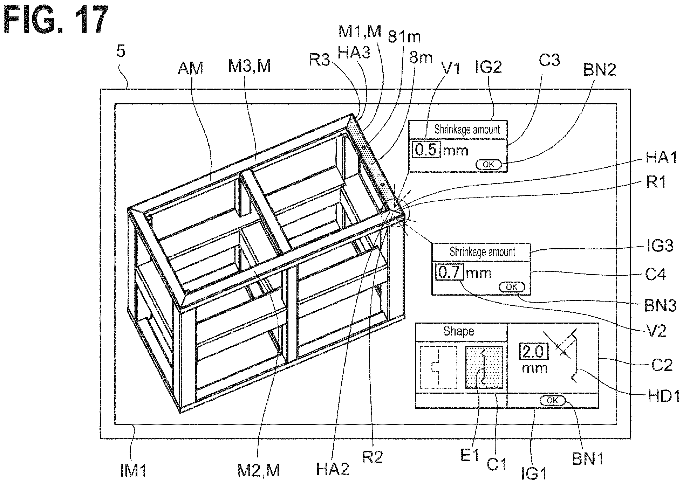

In the examples illustrated in FIG. 9 and FIG. 10 (or FIG. 16 and FIG. 17), the calculator 2 (more specifically, the machining path generation model creation unit 21) executes processing (hereinafter, referred to as "first display processing") for displaying a first image IM1 on the display 5. More specifically, the calculator 2 executes the program P stored in the memory 3 to cause the display 5 to display the first image IM1. Images included in the first image IM1 will be described later.

### (Determination of First Shape HD1)

The above-described first determination processing (in other words, the first determination processing for determining the first shape HD1) includes receiving a first input from the user by the inputter 4, and determining, by the calculator 2, the first shape HD1 as the first positioning shape between the first elongated member Q1 and the second elongated member Q2 in the first welding portion T1, based on the first input.

In the examples illustrated in FIG. 9 and FIG. 10 (or FIG. 16 and FIG. 17), the calculator 2 causes the display 5 to display an image IG1 (more specifically, a first window C1, and/or a second window C2) for receiving the first input for identifying the first shape HD1.

In the examples illustrated in FIG. 9 and FIG. 10 (or FIG. 16 and FIG. 17), the first image IM1 includes the image IG1 (more specifically, the first window C1, and/or the second window C2) for receiving the first input for identifying the first shape HD1. The first image IM1 may include an image indicating the shape of the first model M1. The first image IM1 may include an image indicating the shape of the second model M2. The first image IM1 may include an image indicating the shape of the third model M3 (see FIG. 16 and FIG. 17).

In the example illustrated in FIG. 9 (or FIG. 16), the image IG1 (more specifically, the first window C1) for receiving the first input includes an image indicating a first candidate E1 of the shape type, and an image indicating a second candidate E2 of the shape type. The first candidate E1 has, for example, a first type of spigot shape. The second candidate E2 has, for example, a second type of spigot shape. In this specification, the spigot shape means a boundary shape between a protrusion and a recess in a place where the protrusion is fitted in the recess.

In the example illustrated in FIG. 10 (or FIG. 17), the image IG1 for receiving the first input includes the second window C2 in which the dimensions of the first shape HD1 are to be input.

In the example illustrated in FIG. 9 (or FIG. 16), upon selection of the first candidate E1 from a plurality of candidate of the shape type on the inputter 4, the calculator 2 (more specifically, the machining path generation model creation unit 21) selects the shape type indicated by the first candidate E1 as the shape type of the first shape HD1. In the example illustrated in FIG. 10 (or FIG. 17), upon input of the dimensions of the first shape HD1 on the inputter 4, the calculator 2 (more specifically, the machining path generation model creation unit 21) determines the first shape HD1 based on the input dimensions.

More specifically, in the examples illustrated in FIG. 9 and FIG. 10 (or FIG. 16 and FIG. 17), upon selection of the first candidate E1 from the plurality of candidates of the shape type on the inputter 4 and the input of the dimensions of the first shape HD1 on the inputter 4, the calculator 2 determines the first shape HD1 based on the selected first candidate E1 and the input dimensions.

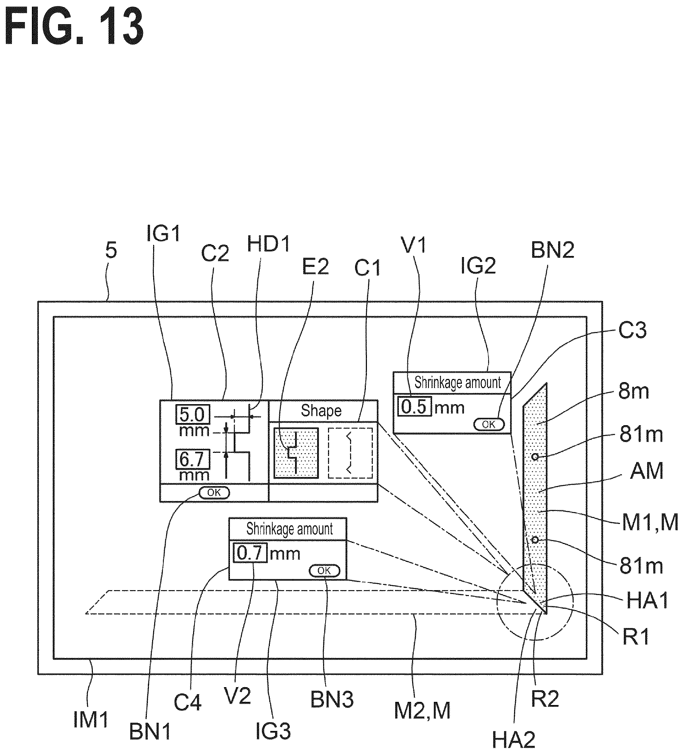

In the example illustrated in FIG. 13, upon selection of the second candidate E2 from the plurality of candidates of the shape type on the inputter 4 and the input of the dimensions of the first shape HD1 on the inputter 4, the calculator 2 determines the first shape HD1 based on the selected second candidate E2 and the input dimensions.

### (Determination of First Value V1)

The above-described second determination processing (in other words, the second determination processing for determining the first value V1) may include receiving a second input (more specifically, an input of first data identifying the first value V1) from the user by the inputter 4, and determining, by the calculator 2, the first value V1 indicating the first shrinkage amount of the first elongated member Q1 as a result of the welding in the first welding portion T1 based on the second input (more specifically, an input of first data identifying the first value V1).

In the example illustrated in FIG. 9 (or FIG. 16), the calculator 2 causes the display 5 to display an image IG2 for receiving the second input (more specifically, an input of first data identifying the first value V1). In the example illustrated in FIG. 9 (or FIG. 16), the first image IM1 includes the image IG2 for receiving the second input.

As in the example illustrated in FIG. 9 (or FIG. 16), the image IG2 for receiving the second input may include a third window C3 for receiving an input of the first data identifying the first value V1.

The third window C3 may be an input window of direct input format for allowing the user to directly input numbers. Alternatively, as in the example illustrated in FIG. 10, the third window C3 may be an input window of selection format configured for selection of one of a plurality of listed numbers displayed. A recommended value Vc for the first value V1 may be displayed on the third window C3. The recommended value Vc may be a value registered by the user.

### (Second Image IM2)

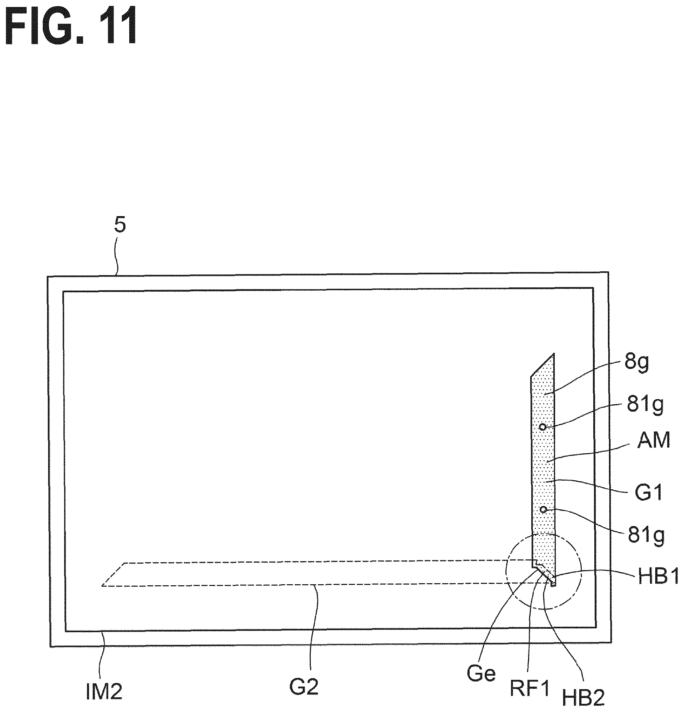

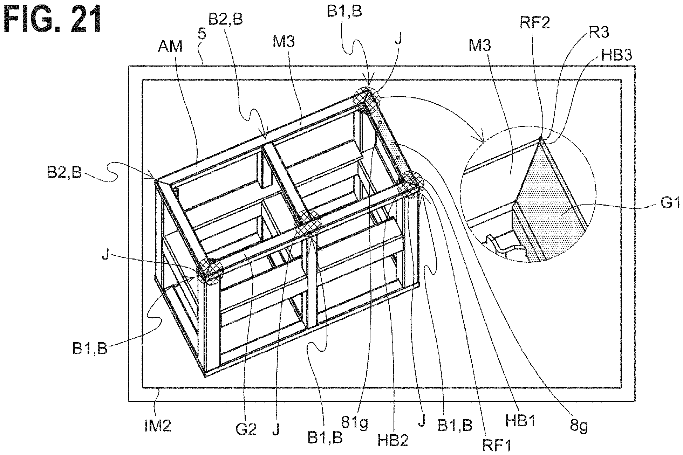

In the example illustrated in FIG. 11 (or FIG. 21), the calculator 2 (more specifically, the machining path generation model creation unit 21) executes processing (hereinafter, referred to as "second display processing") of causing the display 5 to display a second image IM2. More specifically, the calculator 2 executes the program P stored in the memory 3 to cause the display 5 to display the second image IM2. Images included in the second image IM2 will be described later.

### (Displaying of Machining Path Generation Model)

The machining path generator 1A (more specifically, the calculator 2) causes the display 5 to display the first machining path generation model G1 created as a result of executing the first creation processing. In the example illustrated in FIG. 11 (or FIG. 21), the second image IM2 includes an image indicating the shape of the first machining path generation model G1.

In the examples illustrated in FIG. 10 and FIG. 11 (or FIG. 17 and FIG. 21), the calculator 2 (more specifically, the machining path generation model creation unit 21), which executes the second display processing, includes displaying the first machining path generation model G1 (see FIG. 11 or FIG. 21) at the position (see FIG. 10 or FIG. 17) of the display 5 where the first model M1 has been displayed. With the first machining path generation model G1 displayed at the position where the first model M1 has been displayed, the user can easily recognize that the first machining path generation model G1 has been created with the welding shrinkage taken into consideration.

Displaying the first machining path generation model G1 on the display 5 may include displaying the first machining path generation model G1 (see FIG. 11) in place of the model with the first model M1 (see FIG. 10), to facilitate the recognition of creation of the first machining path generation model G1 with the welding shrinkage taken into consideration. Alternatively, displaying the first machining path generation model G1 on the display 5 may include simultaneously displaying the first machining path generation model G1 and the first model M1 with the first machining path generation model G1 and the first model M1 overlapping.

As in the example illustrated in FIG. 11, the first machining path generation model G1 displayed on the display 5 may include a first interference portion RF1 where the first machining path generation model G1 and the corrected second model M2 (more specifically, the later-described second machining path generation model G2) overlap. In other words, the first machining path generation model G1 displayed on the display 5 may include the first interference portion RF1 where the first machining path generation model G1 protrudes into the corrected second model M2 (more specifically, the later-described second machining path generation model G2). In the example illustrated in FIG. 11, the first machining path generation model G1 has a part Ge of an end surface located inside the corrected second model M2 (more specifically, the later-described second machining path generation model G2). With the first interference portion RF1 displayed on the display 5, the user can easily recognize that the first machining path generation model G1 has been created with the welding shrinkage taken into consideration.

### (Displaying of Assembly Model AM)

In the example illustrated in FIG. 9 (or FIG. 16), the calculator 2, which executes the first display processing, causes the display 5 to display an assembly model AM that is a combination of the plurality of models M. In the example illustrated in FIG. 9 (or FIG. 16), the assembly model AM includes the first model M1 and the second model M2. In the example illustrated in FIG. 9 (or FIG. 16), the first model M1 displayed on the display 5 includes no interference portion where the first model M1 and the second model M2 overlap (in other words, the first model M1 displayed on the display 5 does not protrude into the second model M2).

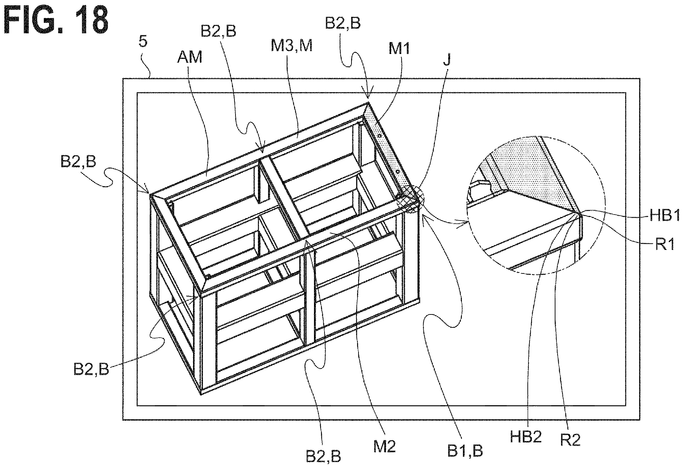

In the example illustrated in FIG. 9, the assembly model AM is a combination of the two models, which are the first model M1 and the second model M2. In the example illustrated in FIG. 16, the assembly model AM is a combination of three or more models including the first model M1 obtained by modeling the first elongated member Q1, the second model M2 obtained by modeling the second elongated member Q2, and the third model M3 obtained by modeling the third elongated member Q3. In other words, the number of models included in the assembly model AM may be two, three, or four or more. As in an example illustrated in FIG. 18, the correction of the shape of the first model M1 and/or the correction of the shape of the second model M2 may be reflected on the assembly model AM. In other words, the assembly model AM may include the corrected first model M1 and/or the corrected second model M2.

In the example illustrated in FIG. 9, each of the two-dimensional shape (for example, shape in plan view) of the first model M1 and the two-dimensional shape (for example, shape in plan view) of the second model M2 is displayed on the display 5. Alternatively, as in an example illustrated in FIG. 16, each of the three-dimensional shape (for example, shape in perspective view) of the first model M1 and the three-dimensional shape (for example, shape in perspective view) of the second model M2 may be displayed on the display 5.

In the example illustrated in FIG. 14, the calculator 2 causes the display 5 to display the assembly model AM, which is a combination of the plurality of models M.

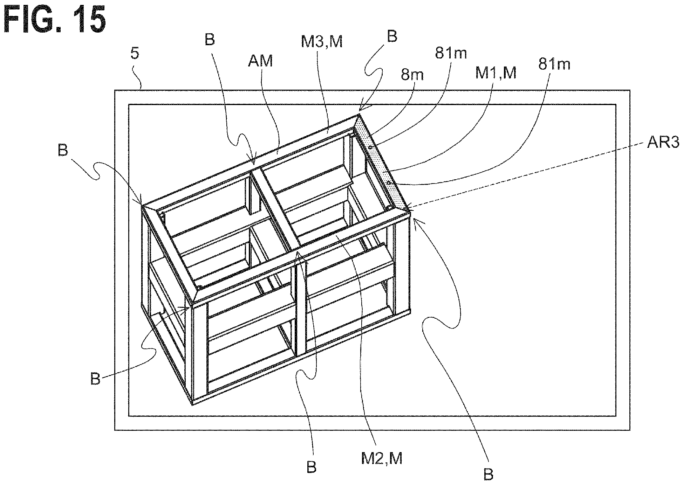

In the examples illustrated in FIG. 14 and FIG. 15, upon selection of the first model M1 in the assembly model AM displayed on the display 5 on the inputter 4, the calculator 2 transmits a highlighting command to the display 5. The display 5 receiving the highlighting command highlights the first model M1 in the assembly model AM displayed on the display 5 (see FIG. 15). For example, the highlighting is implemented by setting the color of the first model M1 to be different from the colors of the other models in the assembly model AM.

Upon designation, on the inputter 4, of a portion (see a dashed-line arrow AR3 in FIG. 15) of the first model M1 selected on the inputter 4 corresponding to the first welding portion T1, the calculator 2 causes the display 5 to display an image (more specifically, the above-described first image IM1) for receiving an input of at least one of the information for determining the first shape HD1 and the information for determining the first value V1 (see FIG. 16).

In the examples illustrated in FIG. 16 and FIG. 17, the calculator 2 causes the display 5 to display the image IG1 (more specifically, the first window C1 and/or the second window C2) for receiving the first input for identifying the first shape HD1, as an image for receiving the information for determining the first shape HD1. In the examples illustrated in FIG. 16 and FIG. 17, the calculator 2 causes the display 5 to display the image IG2 (more specifically, the third window C3) for receiving an input of the first data identifying the first value V1 as an image for receiving the information for determining the first value V1.

### (Third Determination Processing)

In the example illustrated in FIG. 10 (or FIG. 17), the machining path generator 1A (more specifically, the machining path generation model creation unit 21 of the calculator 2) executes processing (hereinafter, referred to as "third determination processing") of determining a second value V2 indicating the shrinkage amount (hereinafter, referred to as "second shrinkage amount") of the second elongated member Q2 as a result of the welding in the first welding portion T1. In the example illustrated in FIG. 10 (or FIG. 17), the second value V2 is displayed on the display 5. The second value V2 is, for example, a value input or selected on the inputter 4. In the example illustrated in FIG. 10 (or FIG. 17), upon approval of the second value V2 through an operation on the inputter 4 (for example, upon clicking of a third button BN3 displayed on the display 5 using a pointer such as a mouse), the machining path generator 1A (more specifically, the calculator 2) determines the second value V2 indicating the second shrinkage amount of the second elongated member Q2 as a result of the welding in the first welding portion T1. Upon determination of the second value V2, the calculator 2 stores the second value V2 in the memory 3 (see FIG. 22).

Alternatively, the calculator 2 may automatically determine the second value V2. For example, the third determination processing may include automatically determining, by the calculator 2, the second value V2 indicating the second shrinkage amount of the second elongated member Q2 as a result of the welding in the first welding portion T1, based on the dimensions of the second model M2 and/or the material of the second elongated member Q2. The third determination processing may include automatically determining, by the calculator 2, the second value V2 indicating the second shrinkage amount of the second elongated member Q2 as a result of the welding in the first welding portion T1, based on data on the second elongated member Q2 (for example, the dimensions of the second model M2 obtained by modeling the second elongated member Q2 and the material of the second elongated member Q2) and welding conditions (for example, welding length, leg length of the welding portion, continuous welding or intermittent welding, the welding material, and welding method (such as, for example, arch welding or laser beam welding)).

### (Determination of Second Value V2)

The above-described third determination processing (in other words, the third determination processing for determining the second value V2) may include receiving a third input (more specifically, an input of second data identifying the second value V2) from the user by the inputter 4, and determining, by the calculator 2, the second value V2 indicating the second shrinkage amount of the second elongated member Q2 as a result of the welding in the first welding portion T1 based on the third input (more specifically, an input of the second data identifying the second value V2).

In the example illustrated in FIG. 10 (or FIG. 17), the calculator 2 causes the display 5 to display an image IG3 for receiving the third input (more specifically, an input of the second data identifying the second value V2). In the example illustrated in FIG. 10 (or FIG. 17), the first image IM1 includes the image IG3 for receiving the third input.

As in the example illustrated in FIG. 10 (or FIG. 17), the image IG3 for receiving the third input may include a fourth window C4 for receiving an input of the second data identifying the second value V2.

The fourth window C4 may be an input window of direct input format for allowing the user to directly input numbers. Alternatively, the fourth window C4 may be an input window of selection format configured for selection of one of a plurality of listed numbers displayed. A recommended value for the second value V2 may be displayed on the fourth window C4. The recommended value may be a value registered by the user.

In the example illustrated in FIG. 10 (or FIG. 17), the second value V2 is different from the first value V1. In other words, the second value V2 determined by the calculator 2 in the machining path generator 1A can be different from the first value V1 determined by the calculator 2.

### (Second Creation Processing)

In the examples illustrated in FIG. 10 and FIG. 11 (or FIG. 17 and FIG. 21), the machining path generator 1A (more specifically, the machining path generation model creation unit 21 of the calculator 2) executes processing (hereinafter, referred to as "second creation processing") for creating the second machining path generation model G2 (see FIG. 11 or FIG. 21) from the second model M2 (see FIG. 10 or FIG. 17) by correcting the shape of the second model M2 based at least on the first shape HD1 and the second value V2. Upon creation of the second machining path generation model G2, the calculator 2 stores shape data DB2 of the second machining path generation model G2 in the memory 3 (see FIG. 22).

In the examples illustrated in FIG. 10 and FIG. 11, the second creation processing includes creating the second machining path generation model G2 (see FIG. 11) from the second model M2 (see FIG. 10) by executing processing including correcting the shape of a portion (hereinafter, referred to as "second portion R2") of the second model M2 corresponding to the first welding portion T1 into a shape conforming to the first shape HD1, based at least on the first shape HD1. As described above, the shape conforming to the first shape HD1 means a shape matching the first shape HD1, or a shape similar to the first shape HD1 (for example, a shape as a result of minor correction on the first shape HD1 to guarantee play between the first elongated member Q1 and the second elongated member Q2).

### (Displaying of Plurality of Machining Path Generation Models)

In the example illustrated in FIG. 11, the machining path generator 1A (more specifically, the calculator 2) causes the display 5 to simultaneously display the first machining path generation model G1 created by executing the first creation processing and the second machining path generation model G2 created by the execution of the second creation processing. In the example illustrated in FIG. 11, the second image IM2 includes an image indicating the shape of the first machining path generation model G1 and an image indicating the shape of the second machining path generation model G2.

In the examples illustrated in FIG. 10 and FIG. 11, displaying the first machining path generation model G1 on the display 5 includes displaying the first machining path generation model G1 (see FIG. 11) at a position (see FIG. 10) where the first model M1 has been displayed, and displaying the second machining path generation model G2 (see FIG. 11) at a position (see FIG. 10) where the second model M2 has been displayed.

As in the examples illustrated in FIG. 10 and FIG. 11, simultaneously displaying the first machining path generation model G1 and the second machining path generation model G2 on display 5 may include displaying the first machining path generation model G1 in place of the first model M1 and displaying the second machining path generation model G2 in place of the second model M2.

In the example illustrated in FIG. 11, the first machining path generation model G1 displayed on the display 5 includes the first interference portion RF1 where the first machining path generation model G1 and the second machining path generation model G2 overlap. More specifically, the first machining path generation model G1 displayed on the display 5 includes the first interference portion RF1 where the first machining path generation model G1 protrudes into the second machining path generation model G2, and the second machining path generation model G2 protrudes into the first machining path generation model G1. With the first interference portion RF1 displayed on the display 5, the user can easily recognize that the first machining path generation model G1 has been created with the welding shrinkage taken into consideration, and that the second machining path generation model G2 has been created with the welding shrinkage taken into consideration.

### (Second Generation Processing)

The machining path generator 1A (more specifically, the machining path generation unit 23 of the calculator 2) executes the first generation processing for generating the first machining path for producing the first elongated member Q1 based on the first machining path generation model G1. Additionally, the machining path generator 1A (more specifically, the machining path generation unit 23 of the calculator 2) may execute processing (hereinafter, referred to as "second generation processing") for generating the second machining path for producing the second elongated member Q2 based on the second machining path generation model G2. The second machining path means a path of a laser beam or a tool for machining the first elongated workpiece W1 or the second elongated workpiece to produce the second elongated member Q2 from the first elongated workpiece W1 or the second elongated workpiece (for example, a path of the laser head 111 moving relative to the first elongated workpiece W1 or the second elongated workpiece to produce the second elongated member Q2 from the first elongated workpiece W1 or the second elongated workpiece). As in the example illustrated in FIG. 8, when the laser beam machine 101 includes the machining head 140 holding a tool such as the machining tool 141, the second machining path may include both a path of the laser beam for machining the first elongated workpiece W1 or the second elongated workpiece, and a path of the tool such as the machining tool 141 for machining the first elongated workpiece W1 or the second elongated workpiece. The calculator 2 stores second machining path data DP2 indicating the generated second machining path in the memory 3 (see FIG. 22).

### (Correction of Shape of Second Model M2)

In the examples illustrated in FIG. 10 and FIG. 11, correcting the shape of the second model M2 includes (1) deforming the shape of the second portion R2 into a shape HB2 (see FIG. 11) conforming to the first shape HD1, and (2) increasing the length of the second model M2 based at on the second value V2.

In other words, the above-described second creation processing includes deforming the shape of the second portion R2 from an original shape HA2 (see FIG. 10) into the shape HB2 (see FIG. 11) conforming to the first shape HD1, and increasing the length of the second model M2 based at least on the second value V2 to create the second machining path generation model G2 from the second model M2.

More specifically, increasing the length of the second model M2 based at least on the second value V2 includes increasing the length of the second model M2 by at least the second value V2. When the first welding portion T1 is the only welding portion in the second elongated member Q2, increasing the length of the second model M2 based at least on the second value V2 includes increasing the length of the second model M2 by the second value V2. Alternatively, when the welding portion in the second elongated member Q2 includes the first welding portion T1 and another welding portion, increasing the length of the second model M2 based at least on the second value V2 includes increasing the length of the second model M2 by a sum of the second value V2 and another value.

As in an example illustrated in FIG. 12, there may be a certain amount of play (in other words, a certain amount of gap) between the corrected shape HB1 of the first portion R1 and the corrected shape HB2 of the second portion R2. FIG. 12 schematically illustrates a state in which the first machining path generation model G1 and the second machining path generation model G2 are positioned. It is a matter of course that in the state in which the first machining path generation model G1 and the second machining path generation model G2 are positioned, there is no first interference portion RF1 (see FIG. 11) where the first machining path generation model G1 and the second machining path generation model G2 protrude into each other.

### (Fourth Determination Processing)

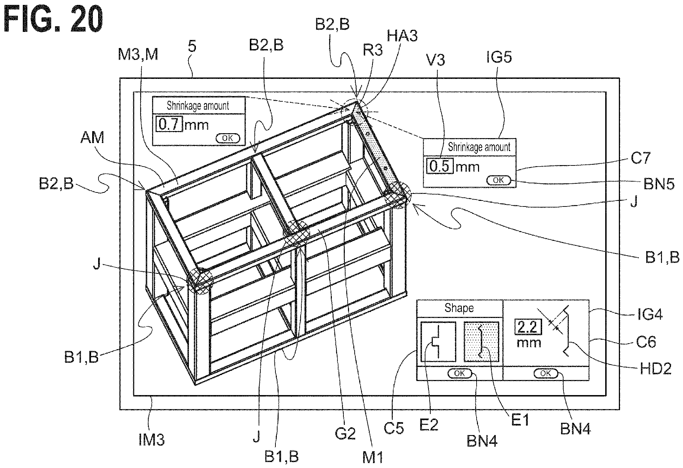

As in the example illustrated in FIG. 20, the machining path generator 1A executes processing (hereinafter, referred to as "fourth determination processing") for determining the second shape HD2 as a positioning shape (hereinafter, referred to as "second positioning shape") between the first elongated member Q1 and the third elongated member Q3 in the second welding portion T2. In the example illustrated in FIG. 20, the second shape HD2 is displayed on the display 5. In the example illustrated in FIG. 20, upon approval of the second shape HD2 through an operation on the inputter 4 (for example, upon clicking of a fourth button BN4 displayed on the display 5 using a pointer such as a mouse), the machining path generator 1A (more specifically, the calculator 2) determines the second shape HD2 as the second positioning shape between the first elongated member Q1 and the third elongated member Q3 in the second welding portion T2. Upon determination of the second shape HD2, the calculator 2 stores shape identification data Dt identifying the second shape HD2 in the memory 3 (see FIG. 22).

### (Fifth Determination Processing)

As in the example illustrated in FIG. 20, the machining path generator 1A executes processing (hereinafter, referred to as "fifth determination processing") for determining the third value V3 as a shrinkage amount (hereinafter, referred to as "third shrinkage amount") of the first elongated member Q1 as a result of the welding in the second welding portion T2. In the example illustrated in FIG. 20, the third value V3 is displayed on the display 5. The third value V3 is, for example, a value input or selected on the inputter 4. In the example illustrated in FIG. 20, upon approval of the third value V3 through an operation on the inputter 4 (for example, upon clicking of a fifth button BN5 displayed on the display 5 using a pointer such as a mouse), the machining path generator 1A (more specifically, the calculator 2) determines the third value V3 indicating the third shrinkage amount of the first elongated member Q1 as a result of the welding in the second welding portion T2. Upon determination of the third value V3, the calculator 2 stores the third value V3 in the memory 3 (see FIG. 22).

The machining path generator 1A executes the first creation processing for creating the first machining path generation model G1 (see FIG. 21) from the first model M1 (see FIG. 17) by correcting the shape of the first model M1 based at least on the first shape HD1, the first value V1, the second shape HD2, and the third value V3. Upon creation of the first machining path generation model G1, the calculator 2 stores the shape data DB1 of the first machining path generation model G1 in the memory 3 (see FIG. 22).

In the examples illustrated in FIG. 17 and FIG. 21, the first creation processing includes creating the first machining path generation model G1 (see FIG. 21) from the first model M1 (see FIG. 17) by executing processing including correcting the shape of a portion (hereinafter, referred to as "third portion R3") of the first model M1 corresponding to the second welding portion T2 into a shape conforming to the second shape HD2 (see FIG. 20), based at least on the second shape HD2. The shape conforming to the second shape HD2 means a shape matching the second shape HD2, or a shape similar to the second shape HD2 (for example, a shape as a result of minor correction on the second shape HD2 to guarantee play between the first elongated member Q1 and the third elongated member Q3).

### (Correction of Shape of First Model M1)

In the examples illustrated in FIG. 17 to FIG. 21, correcting the shape of the first model M1 includes (1) deforming the shape of the first portion R1 into the shape HB1 (see FIG. 21) conforming to first shape HD1, (2) deforming the shape of the third portion R3 into a shape HB3 (see FIG. 21) conforming to the second shape HD2, and (3) increasing the length of the first model M1 based at least on the first value V1 and the third value V3.

In other words, the above-described first creation processing includes deforming the shape of the first portion R1 from the original shape HA1 (see FIG. 17) to the shape HB1 (see FIG. 21) conforming to the first shape HD1, deforming the shape of the third portion R3 from an original shape HA3 (see FIG. 17) into the shape HB3 (see FIG. 21) conforming to the second shape HD2, and creating the first machining path generation model G1 from the first model M1 by increasing the length of the first model M1 based at least on the first value V1 and the third value V3.

More specifically, increasing the length of the first model M1 based at least on the first value V1 and the third value V3 includes increasing the length of the first model M1 by at least the sum of the first value V1 and the third value V3. When the first welding portion T1 and the second welding portion T2 are the only welding portions in the first elongated member Q1, increasing the length of the first model M1 based at least on the first value V1 and the third value V3 includes increasing the length of the first model M1 by the sum of the first value V1 and the third value V3.

In the examples illustrated in FIG. 17 to FIG. 21, the calculator 2 creates the first machining path generation model G1 (see FIG. 21) from the first model M1 by (1) correcting the shape of the first model M1 (see FIG. 18) based at least on the first shape HD1 and the first value V1 and (2) further correcting the corrected shape of the first model M1 based at least on the second shape HD2 and the third value V3.

### (Third Image IM3)

In the example illustrated in FIG. 20, the calculator 2 (more specifically, the machining path generation model creation unit 21) executes processing (hereinafter, referred to as "third display processing") for display a third image IM3 on the display 5. Images included in the third image IM3 will be described later.

### (Determination of Second Shape HD2)

The above-described fourth determination processing (in other words, the fourth determination processing for determining the second shape HD2) may include receiving a fourth input from the user by the inputter 4, and determining, by the calculator 2, the second shape HD2 as the second positioning shape between the first elongated member Q1 and the third elongated member Q3 in the second welding portion T2.

In the example illustrated in FIG. 20, the calculator 2 causes the display 5 to display an image IG4 (more specifically, a fifth window C5 and/or a sixth window C6) for receiving the fourth input for identifying the second shape HD2.

In the example illustrated in FIG. 20, the third image IM3 includes the image IG4 (more specifically, the fifth window C5 and/or the sixth window C6) for receiving the fourth input for identifying the second shape HD2.

In the example illustrated in FIG. 20, the image IG4 (more specifically, the fifth window C5) for receiving the fourth input includes an image indicating the first candidate E1 of the shape type, and an image indicating the second candidate E2 of the shape type. The first candidate E1, for example, has a spigot shape of a first type. The second candidate E2, for example, has a spigot shape of a second type.

In the example illustrated in FIG. 20, the image IG4 for receiving the fourth input includes the sixth window C6 in which the dimensions of the second shape HD2 are input.

In the example illustrated in FIG. 20, upon selection of the first candidate E1 from the plurality of candidates of the shape type on the inputter 4 and the input of the dimensions of the second shape HD2 on the inputter 4, the calculator 2 determines the second shape HD2 based on the selected first candidate E1 and the input dimensions.

### (Determination of Third Value V3)

The above-described fifth determination processing (in other words, the fifth determination processing for determining the third value V3) may include receiving a fifth input (more specifically, an input of third data identifying the third value V3) from the user by the inputter 4, and determining, by the calculator 2, the third value V3 indicating the third shrinkage amount of the first elongated member Q1 as a result of the welding in the second welding portion T2 based on the fifth input (more specifically, an input of the third data identifying the third value V3).

In the example illustrated in FIG. 20, the calculator 2 causes the display 5 to display an image IG5 for receiving the fifth input (more specifically, an input of the third data identifying the third value V3). In the example illustrated in FIG. 20, the third image IM3 includes the image IG5 for receiving the fifth input. In the example illustrated in FIG. 20, the image IG5 or the third image IM3 displayed on the display 5 includes a seventh window C7 for receiving an input of the third data identifying the third value V3.

### (Displaying of Machining Path Generation Model)

In the example illustrated in FIG. 21, the machining path generator 1A (more specifically, the calculator 2) causes the display 5 to display the first machining path generation model G1 as a result of executing the first creation processing.

In the examples illustrated in FIG. 17 and FIG. 21, the calculator 2, which executes the second display processing, includes displaying the first machining path generation model G1 at the position (see FIG. 17) of the display 5 where the first model M1 has been displayed. With the first machining path generation model G1 displayed at the position where the first model M1 has been displayed, the user can easily recognize that the first machining path generation model G1 has been created with the welding shrinkage taken into consideration.

Displaying the first machining path generation model G1 on the display 5 may include displaying the first machining path generation model G1 (see FIG. 21) in place of the first model M1 (see FIG. 17) to facilitate recognition of the creation of the first machining path generation model G1 with the welding shrinkage taken into consideration.

In the example illustrated in FIG. 21, the first machining path generation model G1 displayed on the display 5 includes a second interference portion RF2 where the first machining path generation model G1 and the corrected third model M3 overlap. In other words, the first machining path generation model G1 displayed on the display 5 includes the second interference portion RF2 where the first machining path generation model G1 protrudes into the corrected third model MD3. With the second interference portion RF2 displayed on the display 5, the user can easily recognize that the first machining path generation model G1 has been created with the welding shrinkage taken into consideration.

### (First wall 8m, First Through Hole Portions 81m, Second wall 8g, Second Through Hole Portions 81g)

In the example illustrated in FIG. 10 (or FIG. 17), the first model M1 includes a first wall 8m and first through hole portions 81m provided in the first wall 8m. In the example illustrated in FIG. 11 (or FIG. 21), the first machining path generation model G1 includes a second wall 8g and second through hole portions 81g provided in the second wall 8g.

The second wall 8g of the first machining path generation model G1 is a wall corresponding to the first wall 8m of the first model M1. The second through hole portions 81g of the first machining path generation model G1 are hole portions corresponding to the first through hole portions 81m of the first model M1. In the examples illustrated in FIG. 10 and FIG. 11 (or FIG. 17 and FIG. 21), the shape of the second through hole portions 81g is the same as the shape of the first through hole portions 81m. In the examples illustrated in FIG. 10 and FIG. 11 (or FIG. 17 and FIG. 21), the positions of the second through hole portions 81g in the first machining path generation model G1 are substantially the same as the positions of the first through hole portions 81m in the first model M1.

The first machining path generated as a result of executing the above-described first generation processing (processing for generating the first machining path for producing the first elongated member Q1) includes a perforation machining path generated based on the positions of the second through hole portions 81g and the shape of the second through hole portions 81g.

In the example illustrated in FIG. 8, the laser beam machine 101 receiving the control command SA produces the first elongated member Q1 from the first elongated workpiece W1. In the example illustrated in FIG. 8, the laser beam machine 101 receiving the control command SA irradiates the wall 8w of the first elongated workpiece W1 with a laser beam, to form through hole portions 81h (more specifically, the through hole portions 81h corresponding to the second through hole portions 81g of the first machining path generation model G1) in the wall 8w.

Assume that the through hole portions 81h corresponding to the second through hole portions 81g are formed in the first elongated member Q1, and then the first elongated member Q1 and the second elongated member Q2 are welded in the first welding portion T1. In embodiment 1, the first machining path is created with the welding shrinkage taken into consideration, meaning that the welding shrinkage in the first welding portion T1 leads to no or little shifting of the positions of the through hole portions 81h from desired positions.

When through hole portions requiring high positional accuracy need to be formed in the first elongated member Q1, conventionally, the through hole portions have been formed in the first elongated member Q1 after the first elongated member Q1 and the second elongated member Q2 are welded. On the other hand, in the laser beam machining system 100A according to embodiment 1, when through hole portions requiring high positional accuracy need to be formed in the first elongated member Q1, the through hole portions can be formed in the first elongated member Q1 before the first elongated member Q1 and the second elongated member Q2 are welded. Thus, the assembly including the first elongated member Q1 and the second elongated member Q2 having the through hole portions requiring high positional accuracy can be produced in a shorter period of time. A huge machine corresponding to the assembly needs not to be used or may be used for a shorter period of time.

### (Controller 7)

The controller 7 controls the laser beam machine 101. In the example illustrated in FIG. 23, the controller 7 includes a display 72, an inputter 73 (for example, a touch panel on the display 72), a calculator 74, a communication circuit 75, and a memory 76. In the example illustrated in FIG. 23, the memory 76 stores the machining program PG created based at least on the first machining path. The machining program PG stored in the memory 76 may be a program created based on the first machining path and the second machining path.

The controller 7 (more specifically, the calculator 74) generates the control command SA by executing the machining program PG. In this specification, execution of the machining program PG by the controller 7 (more specifically, the calculator 74) includes execution of the machining program PG by the controller 7 (more specifically, the calculator 74) via a calculation program PJ. In other words, the controller 7 (more specifically, the calculator 74) may execute the calculation program PJ to process (in other words, interprets) the machining program PG.

In the example illustrated in FIG. 23, the display 72, the inputter 73, the calculator 74, the communication circuit 75, and the memory 76 are connected to each other via a bus 77.

The laser beam machine 101 operates based on the control command SA generated as a result of execution of the machining program PG by the controller 7 (more specifically, the calculator 74). More specifically, the communication circuit 75 transmits the control command SA to the laser beam machine 101, and the laser beam machine 101 receiving the control command SA operates based on the control command SA. The control command SA includes a plurality of commands such as a movement command SA1 causing movement of the laser head 111 and an emission command SA2 causing emission of a laser beam from the laser head 111.

### (Laser Beam Machine 101)

In the example illustrated in FIG. 23, the laser beam machine 101 includes a laser beam emitter 110 including the laser head 111, a mover 120, and a workpiece supporter 130.

In the example illustrated in FIG. 23, the workpiece supporter 130 includes a first chuck 131 and a second chuck 134. The first chuck 131 and the second chuck 134 support an elongated workpiece (for example, the first elongated workpiece W1).

The first chuck 131 may include a holding member 132 capable of holding an elongated workpiece (for example, the first elongated workpiece W1). The first chuck 131 may be movable in a direction parallel to the X axis together with the elongated workpiece (for example, the first elongated workpiece W1). In the example illustrated in FIG. 23, the X axis is an axis parallel to the longitudinal direction of the elongated workpiece (for example, the first elongated workpiece W1) held by the first chuck 131.

The second chuck 134 may include a plurality of guide rollers 135 for clamping an elongated workpiece (for example, first elongated workpiece W1). The plurality of guide rollers 135 guide the movement of the elongated workpiece (for example, the first elongated workpiece W1) in the direction parallel to the X axis.

In the example illustrated in FIG. 23, the workpiece supporter 130 may include a rotational driver 137 causing rotation of an elongated workpiece (for example, the first elongated workpiece W1) about the axis parallel to the longitudinal direction of the elongated workpiece.

The mover 120 moves the laser head 111 relative to the workpiece supporter 130.

In the example illustrated in FIG. 23, the mover 120 includes a first mover 121 for moving the laser head 111. The mover 120 may include a workpiece mover for moving an elongated workpiece (for example, first elongated workpiece W1) (more specifically, a motor for moving the elongated workpiece in a direction parallel to the X axis).

In the example illustrated in FIG. 23, the first mover 121 includes moving bodies (122a; 123a) for supporting the laser head 111 and drivers (122b; 123b) for moving the moving bodies (122a; 123a).

The first mover 121 may include the first moving body 122a and the first driver 122b for moving the first moving body 122a in a direction parallel to the Z axis. In the example illustrated in FIG. 23, the first moving body 122a can directly or indirectly support the laser head 111 and move in the direction parallel to the Z axis together with the laser head 111. The Z axis is an axis orthogonal to the X axis. In the example illustrated in FIG. 23, the Z axis is an axis parallel to the vertical direction.

The first mover 121 may include the second moving body 123a and the second driver 123b for moving the second moving body 123a in a direction parallel to the Y axis. In the example illustrated in FIG. 23, the second moving body 123a can directly or indirectly support the laser head 111 and move in the direction parallel to the Y axis together with the laser head 111. The Y axis is an axis orthogonal to both the X axis and the Z axis. In the example illustrated in FIG. 23, the Y axis is an axis parallel to the horizonal plane.

The laser beam emitter 110 includes the laser head 111, a laser beam light source 113, and an optical component 115 (such as, for example, an optical fiber) through which the laser beam is transmitted from the laser beam light source 113 to the laser head 111. The laser head 111 includes a laser beam emission port 112 through which a laser beam is emitted.

As in an example illustrated in FIG. 24, the laser beam machine 101 may include a carry-in part 103, a laser beam machining unit 105, and a carry-out part 107. An elongated workpiece (for example, the first elongated workpiece W1) carried into the carry-in part 103 is conveyed to the laser beam machining unit 105 by a mover such as the workpiece mover. A member such as the first elongated member Q1 produced from an elongated workpiece (for example, the first elongated workpiece W1) is conveyed to the carry-out part 107 from the laser beam machining unit 105 by any transporter such as a conveyer.

### (Laser Beam Machining System 100A)

In the example illustrated in FIG. 24, the laser beam machining system 100A includes the machining path generator 1A (more specifically, the CAD/CAM device 10a), the controller 7, and the laser beam machine 101. In the example illustrated in FIG. 24, the machining path generator 1A (more specifically, the CAD/CAM device 10a) and the controller 7 are connected through a wire LN or wirelessly, to be capable of exchanging information.

The machining path generator 1A generates the above-described first machining path. The machining path generator 1A may generate the above-described second machining path. The machining path generator 1A may create the machining program PG based at least on the first machining path. In the example illustrated in FIG. 24, the machining path generator 1A can transmit the machining program PG to the controller 7 through the wire LN or wirelessly. The controller 7 stores the machining program PG received from the machining path generator 1A in the memory 76. Alternatively, the controller 7 may create the machining program PG based at least on the first machining path. In this case, the first machining path generated by the machining path generator 1A may be transmitted to the controller 7 through the wire LN or wirelessly, and the controller 7 may create the machining program PG based at least on the first machining path. The created machining program PG is stored in the memory 76.

Alternatively, information may be exchanged between the machining path generator 1A and the controller 7 using a portable memory (for example, a USB memory).

In the example illustrated in FIG. 24, the controller 7 is disposed at a location where the laser beam machine 101 is disposed. More specifically, the controller 7 and the laser beam machine 101 are disposed in the same work room SP1. The controller 7 may be attached to the laser beam machine 101 (for example, an outer wall of the laser beam machine 101). In the example illustrated in FIG. 24, the machining path generator 1A is disposed in a room (more specifically, office space SP2) different form the work room SP1, where the laser beam machine 101 is disposed.

### (Embodiment 2)

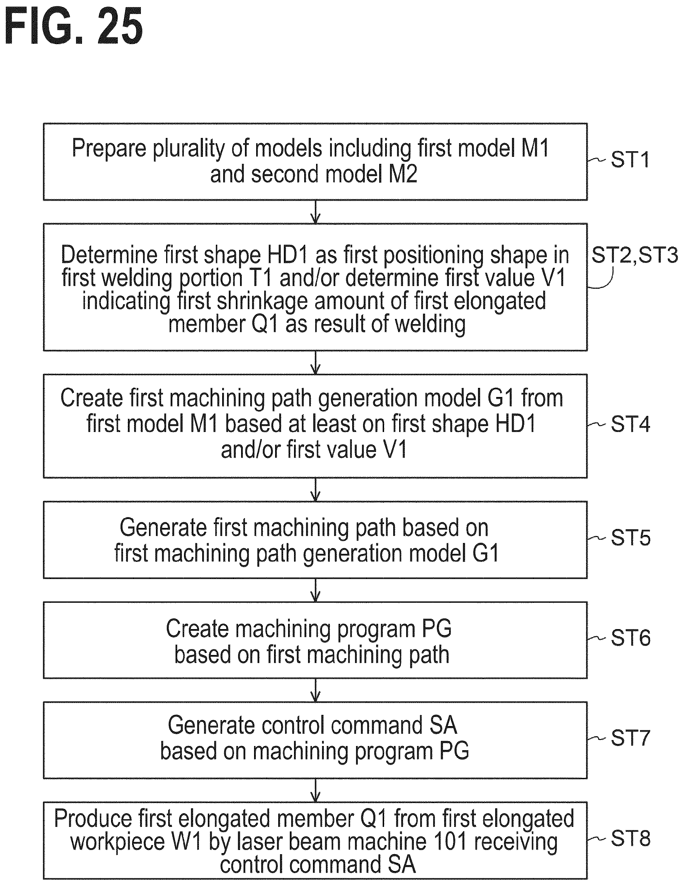

A machining path generation method and a laser beam machining method according to embodiment 2 will be described with reference to FIG. 1 to FIG. 25. FIG. 25 is a flowchart illustrating an example of the laser beam machining method according to embodiment 2.

In embodiment 2, points different from embodiment 1 will be mainly described. Meanwhile, redundant description on matters described in embodiment 1 will be omitted in embodiment 2. Thus, it is a matter of course that matters described in embodiment 1 are applicable to embodiment 2 even if such matters are not clearly described in embodiment 2. Conversely, the respects described in embodiment 2 are applicable to embodiment 1.

The machining path generation method according to embodiment 2 may be performed using the machining path generator 1A (for example, the CAD/CAM device 10a) or the laser beam machining system 100A in embodiment 1 or may be performed using other machining path generators or laser beam machining systems.

In a first step ST1, the plurality of models M are prepared. The first step ST1 is a preparation process. In the example illustrated in FIG. 2, FIG. 9, or FIG. 14, the plurality of models M prepared in the preparation process include the first model M1 obtained by modeling the first elongated member Q1 and the second model M2 obtained by modeling the second elongated member Q2. The plurality of models M prepared in the preparation process may include the third model M3 obtained by modeling the third elongated member Q3.

The preparation process (first step ST1) includes, for example, reading the shape data DA of the plurality of models M by the machining path generator 1 (for example, the CAD/CAM device 10a). More specifically, the preparation process (first step ST1) includes reading the file F including the shape data DA of the plurality of models M from the memory 3 by the machining path generator 1 (more specifically, the calculator 2), which executes the program P stored in the memory 3.

Alternatively or additionally, the preparation process (first step ST1) may include displaying the plurality of models M on the display 5 by the calculator 2 as in the example illustrated in FIG. 2. Alternatively or additionally, the preparation process (first step ST1) may include creating the plurality of models M including the first model M1 and the second model M2 using software (for example, CAD software) executed by the calculator 2.

In a second step ST2, the positioning shape in the welding portion is determined. The second step ST2 is a shape determination process.

As in the example illustrated in FIG. 3, a portion where the first elongated member Q1 and the second elongated member Q2 are to be welded is defined as the first welding portion T1. In the example illustrated in FIG. 4, FIG. 9, or FIG. 17, the shape determination process (second step ST2) includes determining the first shape HD1 as the first positioning shape between the first elongated member Q1 and the second elongated member Q2 in the first welding portion T1.

The shape determination process (more specifically, the process of determining the first shape HD1 as the first positioning shape) is performed by the machining path generator 1 (more specifically, the calculator 2) executing the program P based on a user instruction received by the inputter 4. More specifically, the shape determination process (second step ST2) includes receiving the first input for identifying the first shape HD1 by the inputter 4 serving as the user interface (more specifically, receiving the first input for identifying the first shape HD1 by the inputter 4 from the user), and determining the above-described first shape HD1 by the calculator 2 based on the first input.

Alternatively, the shape determination process (second step ST2) may be automatically performed by the calculator 2. For example, the shape determination process (second step ST2) may include automatically recognizing the shape of a boundary portion (hereinafter, referred to as "first boundary portion") between the first model M1 and the second model M2 by the calculator 2, and automatically determining the first shape HD1 as the positioning shape suitable for the shape of the first boundary portion by the calculator 2, based on the shape of the first boundary portion.

The shape determination process (second step ST2) may include storing the shape identification data Ds identifying the first shape HD1 determined by the calculator 2 in the memory 3 (see FIG. 7 or FIG. 22).

In a third step ST3, the shrinkage amount of the elongated member as a result of the welding is determined. The third step ST3 is a shrinkage amount determination process.

In the example illustrated in FIG. 4, FIG. 9, or FIG. 17, the shrinkage amount determination process (third step ST3) includes determining the first value V1 indicating the first shrinkage amount of the first elongated member Q1 as a result of the welding in the first welding portion T1.

The shrinkage amount determination process (more specifically, the process of determining the first value V1 indicating the first shrinkage amount) is performed by the machining path generator 1 (more specifically, the calculator 2) executing the program P based on a user instruction received by the inputter 4. More specifically, the shrinkage amount determination process (third step ST3) includes receiving the second input for identifying the first value V1 by the inputter 4 serving as the user interface (more specifically, receiving the second input for identifying the first value V1 by the inputter 4 from the user), and determining the above-described first value V1 by the calculator 2 based on the second input.

Alternatively, the first value V1 may be automatically determined by the calculator 2. For example, the shrinkage amount determination process (third step ST3) may include, by the calculator 2, automatically determining the first value V1 indicating the first shrinkage amount of the first elongated member Q1 as a result of the welding in the first welding portion T1 based on the dimensions of the first model M1 and/or the material of the first elongated member Q1. The shrinkage amount determination process (third step ST3) may include automatically determining, by the calculator 2, the first value V1 indicating the first shrinkage amount of the first elongated member Q1 as a result of the welding in the first welding portion T1, based on data on the first elongated member Q1 (for example, the dimensions of the first model M1 obtained by modeling the first elongated member Q1 and the material of the first elongated member Q1) and welding conditions (for example, welding length, leg length of the welding portion, continuous welding or intermittent welding, the welding material, and welding method (such as, for example, arch welding or laser beam welding)).

The shrinkage amount determination process (third step ST3) may include storing the first value V1 determined by the calculator 2 in the memory 3 (see FIG. 7 or FIG. 22).

The third step ST3 may be executed before the second step ST2, after the second step ST2, or in parallel with the second step ST2. One of the second step ST2 (shape determination process) and the third step ST3 (shrinkage amount determination process) may be omitted.

In a fourth step ST4, at least one machining path generation model is created from at least one model. The fourth step ST4 is a machining path generation model creation process.

In the examples illustrated in FIG. 4 and FIG. 5, FIG. 10 and FIG. 11, or FIG. 17 and FIG. 21, the machining path generation model creation process includes creating the first machining path generation model G1 from the first model M1 by correcting the shape of the first model M1 based on at least one of the first shape HD1 and the first value V1 (more specifically, based at least on the first shape HD1 and the first value V1).

The machining path generation model creation process (fourth step ST4) may be automatically performed by the machining path generator 1 (more specifically, the calculator 2) executing the program P. More specifically, the machining path generation model creation process (fourth step ST4) may include automatically creating the first machining path generation model G1 from the first model M1 based on at least one of the first shape HD1 and the first value V1 (more specifically, based at least on the first shape HD1 and the first value V1) by the calculator 2.

The machining path generation model creation process (fourth step ST4) may include storing the shape data DB1 of the first machining path generation model G1 created by the calculator 2 in the memory 3 (see FIG. 7 or FIG. 22).

In a fifth step ST5, the machining path is generated. The fifth step ST5 is a machining path generation process.

The machining path generation process (fifth step ST5) includes generating the first machining path for producing the first elongated member Q1 based on the first machining path generation model G1. The first machining path is already described in embodiment 1. Thus, redundant description on the first machining path will be omitted.

The machining path generation process (fifth step ST5) may be automatically performed by the machining path generator 1 (more specifically, the calculator 2) executing the program P. More specifically, the machining path generation process (fifth step ST5) may include automatically generating the first machining path for producing the first elongated member Q1 by the calculator 2 based on the first machining path generation model G1.

The machining path generation process (fifth step ST5) may include storing the first machining path data DP1 indicating the first machining path generated by the calculator 2 in the memory 3 (see FIG. 7 or FIG. 22).

The laser beam machining method according to embodiment 1 includes, in addition to the above-described first step ST1 to fifth step ST5, (1) creating the machining program PG based at least on the above-described first machining path, (2) generating the control command SA by the controller 7 executing the machining program PG, and (3) producing the first elongated member Q1 from the first elongated workpiece W1 by irradiating the first elongated workpiece W1 with a laser beam by the laser beam machine 101 receiving the control command SA.

In the machining path generation method according to embodiment 2 (or the laser beam machining method according to embodiment 2), the first machining path generation model G1 is created with the welding shrinkage taken into consideration, and the first machining path is generated based on the first machining path generation model G1. Thus, after the first elongated member Q1 produced by the laser beam machine 101 based on the first machining path and the second elongated member Q2 different from the first elongated member Q1 are welded in the first welding portion T1, the assembly including the first elongated member Q1 and the second elongated member Q2 has a desired shape.

In the machining path generation method according to embodiment 2 (or the laser beam machining method according to embodiment 2), the first machining path generation model G1 is created by correcting the first model M1 based on the first shape HD1 as the first positioning shape, and the first machining path is generated based on the first machining path generation model G1. Thus, the first elongated member Q1 produced by the laser beam machine 101 can be easily positioned with the second elongated member Q2. Thus, positioning jigs for welding can be omitted, or the number of such positioning jigs can be reduced.

### (Optional Configurations)

Next, optional configurations that can be adopted in the machining path generation method and the laser beam machining method according to embodiment 2 will be described with reference to FIG. 1 to FIG. 25.

### (Machining Path Generator 1A, Laser Beam Machining System 100A)

The above-described first step ST1 to fifth step ST5 are, for example, executed by the machining path generator 1A (more specifically, the CAD/CAM device 10a) according to embodiment 1 or the laser beam machining system 100A according to embodiment 1. The machining path generator 1A and the laser beam machining system 100A are already described in embodiment 1. Thus, redundant description on the machining path generator 1A and the laser beam machining system 100A will be omitted.

### (Correction of Shape of First Model M1)

As in the example illustrated in FIG. 4, FIG. 10, or FIG. 17, a portion of the first model M1 corresponding to the first welding portion T1 (see FIG. 3) is defined as the first portion R1.

In the examples illustrated in FIG. 4 and FIG. 5, FIG. 10 and FIG. 11, or FIG. 17 and FIG. 21, correcting the shape of the first model M1 includes (1) deforming the shape of the first portion R1 into the shape HB1 conforming to the first shape HD1, and (2) increasing the length of the first model M1 based at least on the first value V1.

In other words, the machining path generation model creation process (fourth step ST4) includes deforming the shape of the first portion R1 from the original shape HA1 into the shape HB1 conforming to the first shape HD1, and increasing the length of the first model M1 based at least on the first value V1 to create the first machining path generation model G1 from the first model M1.

More specifically, increasing the length of the first model M1 based at least on the first value V1 includes increasing the length of the first model M1 by at least the first value V1. When the first welding portion T1 is the only welding portion in the first elongated member Q1, increasing the length of the first model M1 based at least on the first value V1 includes increasing the length of the first model M1 by the first value V1. When the first welding portion T1 and the second welding portion T2 are welding portions in the first elongated member Q1, increasing the length of the first model M1 based at least on the first value V1 includes increasing the length of the first model M1 by the sum of the first value V1 and the third value V3 (more specifically, the third value V3 indicating the third shrinkage amount of the first elongated member Q1 as a result of the welding in the second welding portion T2).

As in the examples illustrated in FIG. 17 to FIG. 21, the machining path generation method according to embodiment 2 may include (1) correcting the shape of the first model M1 based at least on the first shape HD1 and the first value V1 (see FIG. 18), and (2) further correcting the corrected shape of the first model M1 based at least on the second shape HD2 and the third value V3 to create the first machining path generation model G1 from the first model M1 (see FIG. 21).

### (Display of Assembly Model AM)

As in the example illustrated in FIG. 2, FIG. 9, or FIG. 14, the machining path generation method according to embodiment 2 (more specifically, the above-described first step ST1) may include displaying the assembly model AM, which is a combination of the plurality of models M on the display 5.

In the example illustrated in FIG. 2, FIG. 9, or FIG. 14, the assembly model AM displayed on the display 5 includes the first model M1 and the second model M2. The assembly model AM displayed on the display 5 may include the third model M3. As in the example illustrated in FIG. 9, a two-dimensional shape (for example, shape in plan view) of the assembly model AM may be displayed on the display 5. Alternatively, as in the example illustrated in FIG. 14, a three-dimensional shape (for example, shape in perspective view) of the assembly model AM may be displayed on the display 5.

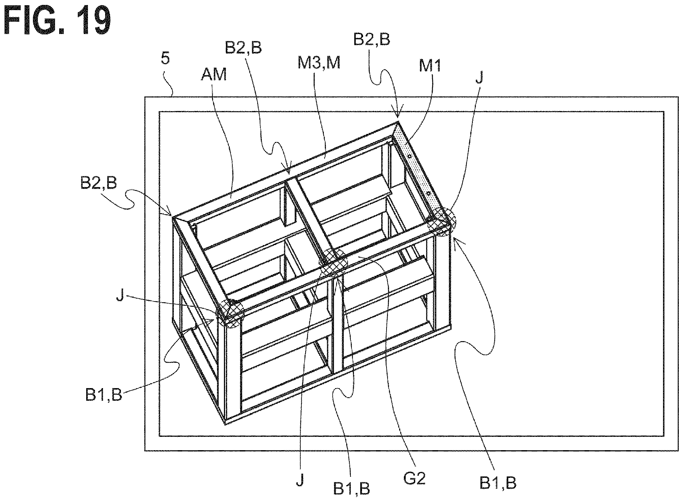

In the example illustrated in FIG. 14, when a region indicating the boundary between two adjacent models M is defined as a boundary region B, the assembly model AM includes a plurality of boundary regions B. When the assembly model AM includes the plurality of boundary regions B, it may be difficult for the user to recognize which of the boundary regions B corresponds to the shape corrected. Thus, as in the examples illustrated in FIG. 18 to FIG. 21, the machining path generation method according to embodiment 2 may include adding a highlighting portion J for distinguishing a shape corrected boundary region B1 from other boundary regions B2 to the assembly model AM displayed on the display 5. For example, assume that the shapes of the two boundary regions are newly corrected in the assembly model AM illustrated in FIG. 18. In this case, as in the example illustrated in FIG. 19, two highlighting portions J are newly added to the assembly model AM. In the examples illustrated in FIG. 18 to FIG. 21, the highlighting portions J have a circular shape. Alternatively, the highlighting portion J may have another shape (for example, a polygonal shape).

As in the examples illustrated in FIG. 14 and FIG. 15, the machining path generation method according to embodiment 2 may include upon selection of the first model M1 in the assembly model AM displayed on the display 5, highlighting the first model M1 in the assembly model AM displayed on the display 5. The highlighting is implemented by setting the color of the first model M1 to be different from the colors of the other models in the assembly model AM.

As in the examples illustrated in FIG. 15 and FIG. 16, the machining path generation method according to embodiment 2 may include upon designation, on the inputter 4, of a portion (see the dashed-line arrow AR3 in FIG. 15) of the first model M1 selected on the inputter 4 corresponding to the first welding portion T1, displaying, on the display 5, an image (more specifically, the first image IM1 illustrated in FIG. 16) for receiving an input of information for determining the first shape HD1 and/or an input of information for determining the first value V1.

In the examples illustrated in FIG. 16 and FIG. 17, the image IG1 (more specifically, the first window C1 and/or the second window C2) for receiving the first input for identifying the first shape HD1 is displayed on the display 5 as the image for receiving the information for determining the first shape HD1. In the examples illustrated in FIG. 16 and FIG. 17, the image IG2 (more specifically, the third window C3) for receiving an input of the first data identifying the first value V1 is displayed on the display 5 as the image for receiving the information for determining the first value V1.

### (First Image IM1)

In the examples illustrated in FIG. 9 and FIG. 10 or FIG. 16 and FIG. 17, the machining path generation method according to embodiment 2 includes displaying the first image IM1 on the display 5.

### (Displaying of First Shape HD1)

In the examples illustrated in FIG. 9 and FIG. 10 or FIG. 16 and FIG. 17, the machining path generation method according to embodiment 2 (more specifically, the above-described second step ST2) includes displaying the image IG1 (more specifically, the first window C1 and/or the second window C2) for receiving the first input for identifying the first shape HD1 on the display 5.

In the examples illustrated in FIG. 9 and FIG. 10 or FIG. 16 and FIG. 17, the first image IM1 includes the image IG1 (more specifically, the first window C1 and/or the second window C2) for receiving the first input for identifying the first shape HD1. The first image IM1 may include an image indicating the shape of the first model M1. The first image IM1 may include an image indicating the shape of the second model M2. Furthermore, the first image IM1 may include an image indicating the shape of the third model M3 (see FIG. 16 and FIG. 17).

In the example illustrated in FIG. 9 or FIG. 16, the image IG1 (more specifically, the first window C1) for receiving the first input includes an image indicating the first candidate E1 of the shape type and an image indicating the second candidate E2 of the shape type. The first candidate E1, for example, has a spigot shape of a first type. The second candidate E2 has a spigot shape of a second type.

In the example illustrated in FIG. 10 or FIG. 17, the image IG1 for receiving the first input includes the second window C2 on which the dimensions of the first shape HD1 are input.

In the example illustrated in FIG. 9 or FIG. 16, the machining path generation method according to embodiment 2 (more specifically, the above-described second step ST2) includes upon selection of the first candidate E1 from the plurality of candidates of the shape type on the inputter 4, adopting the shape type indicated by the first candidate E1 as the shape type of the first shape HD1 by the calculator 2. In the example illustrated in FIG. 10 or FIG. 17, the machining path generation method according to embodiment 2 (more specifically, the above-described second step ST2) includes upon input of the dimensions of the first shape HD1 on the inputter 4, determining the first shape HD1 based on the input dimensions by the calculator 2.

The machining path generation method according to embodiment 2 (more specifically, the above-described second step ST2) may include upon selection of the first candidate E1 from the plurality of candidates of the shape type on the inputter 4 (for example, see FIG. 16) and the input of the dimensions of the first shape HD1 on the inputter 4 (for example, see FIG. 17), determining the first shape HD1 based on the selected first candidate E1 and the input dimensions by the calculator 2.

### (Determination of First Value V1)

In the example illustrated in FIG. 4, FIG. 9, or FIG. 16, the machining path generation method according to embodiment 2 (more specifically, the above-described third step ST3) includes displaying the image IG2 for receiving a second input (more specifically, an input of the first data identifying the first value V1) on the display 5. In the example illustrated in FIG. 4, FIG. 9, or FIG. 16, the first image IM1 includes the image IG2 for receiving the second input.

In the example illustrated in FIG. 4, FIG. 9, or FIG. 16, the image IG2 for receiving the second input includes the third window C3 for receiving the input of the first data identifying the first value V1.

The third window C3 may be an input window of direct input format for allowing the user to directly input numbers. Alternatively, as in the example illustrated in FIG. 10, the third window C3 may be an input window of selection format configured for selection of one of a plurality of listed numbers displayed. A recommended value Vc for the first value V1 may be displayed on the third window C3. The recommended value Vc may be a value registered by the user.

### (Determination of Second Value V2)

As in the example illustrated in FIG. 10 or FIG. 17, the machining path generation method according to embodiment 2 (more specifically, the above-described third step ST3) may include determining the second value V2 indicating the second shrinkage amount of the second elongated member Q2 as a result of the welding in the first welding portion T1.

The shrinkage amount determination process (more specifically, the process of determining the second value V2 indicating the second shrinkage amount) is performed by the machining path generator 1 (more specifically, the calculator 2) executing the program P based on a user instruction received by the inputter 4. More specifically, the shrinkage amount determination process (third step ST3) includes receiving the third input for identifying the second value V2 by the inputter 4 serving as the user interface, and determining the above-described second value V2 by the calculator 2 based on the third input.

Alternatively, the second value V2 may be automatically determined by the calculator 2. For example, the shrinkage amount determination process (third step ST3) may include, by the calculator 2, automatically determining the second value V2 indicating the second shrinkage amount of the second elongated member Q2 as a result of the welding in the first welding portion T1 based on the dimensions of the second model M2 and/or the material of the second elongated member Q2. The shrinkage amount determination process (third step ST3) may include automatically determining, by the calculator 2, the second value V2 indicating the second shrinkage amount of the second elongated member Q2 as a result of the welding in the first welding portion T1, based on data on the second elongated member Q2 (for example, the dimensions of the second model M2 obtained by modeling the second elongated member Q2 and the material of the second elongated member Q2) and welding conditions (for example, welding length, leg length of the welding portion, continuous welding or intermittent welding, the welding material, and welding method (such as, for example, arch welding or laser beam welding)).

The shrinkage amount determination process (third step ST3) may include storing the second value V2 determined by the calculator 2 in the memory 3 (see FIG. 22).

In the example illustrated in FIG. 10 or FIG. 17, the machining path generation method according to embodiment 2 (more specifically, the above-described third step ST3) includes displaying the image IG3 for receiving the third input (more specifically, an input of the second data identifying the second value V2) on the display 5. In the example illustrated in FIG. 10 or FIG. 17, the first image IM1 includes the image IG3 for receiving the third input.

In the example illustrated in FIG. 10 or FIG. 17, the image IG3 for receiving the third input may include the fourth window C4 for receiving an input of the second data identifying the second value V2.

The fourth window C4 may be an input window of direct input format for allowing the user to directly input numbers. Alternatively, the fourth window C4 may be an input window of selection format configured for selection of one of a plurality of listed numbers displayed.

### (Determination of Second Shape HD2)

As in the example illustrated in FIG. 3, a portion where the first elongated member Q1 and the third elongated member Q3 are to be welded is defined as the second welding portion T2. In the example illustrated in FIG. 20, the machining path generation method according to embodiment 2 (more specifically, the above-described second step ST2) includes determining the second shape HD2 as the second positioning shape between the first elongated member Q1 and the third elongated member Q3 in the second welding portion T2.

The shape determination process (more specifically, the process of determining the second shape HD2 as the second positioning shape) is performed by the machining path generator 1 (more specifically, the calculator 2) executing the program P based on a user instruction received by the inputter 4. More specifically, the shape determination process (second step ST2) includes receiving the fourth input for identifying the second shape HD2 by the inputter 4 serving as the user interface (more specifically, receiving the fourth input for identifying the second shape HD2 by the inputter 4 from the user), and determining the above-described second shape HD2 by the calculator 2 based on the fourth input. Alternatively, the second shape HD2 may be automatically determined by the calculator 2.

The shape determination process (second step ST2) may include storing the shape identification data Dt identifying the second shape HD2 determined by the calculator 2 in the memory 3 (see FIG. 22).

In the example illustrated in FIG. 20, the machining path generation method according to embodiment 2 includes displaying the third image IM3 on the display 5.

In the example illustrated in FIG. 20, the machining path generation method according to embodiment 2 (more specifically, the above-described second step ST2) includes displaying the image IG4 (more specifically, the fifth window C5 and/or the sixth window C6) for receiving the fourth input for identifying the second shape HD2 on the display 5.

In the example illustrated in FIG. 20, the third image IM3 includes the image IG4 (more specifically, the fifth window C5 and/or the sixth window C6) for receiving the fourth input for identifying the second shape HD2. The third image IM3 may include an image indicating the shape of the first model M1 (more specifically, an image indicating the corrected shape of the first model M1). The third image IM3 may include an image indicating the corrected shape of the second model M2 or the second machining path generation model G2. Furthermore, the third image IM3 may include an image indicating the shape of the third model M3.

In the example illustrated in FIG. 20, the image IG4 (more specifically, the fifth window C5) for receiving the fourth input includes an image indicating the first candidate E1 of the shape type and an image indicating the second candidate E2 of the shape type. The first candidate E1, for example, has a spigot shape of a first type. The second candidate E2 has a spigot shape of a second type.

In the example illustrated in FIG. 20, the image IG4 for receiving the fourth input includes the sixth window C6 on which the dimensions of the second shape HD2 are input.

The machining path generation method according to embodiment 2 (more specifically, the above-described second step ST2) may include upon selection of the first candidate E1 from the plurality of candidates of the shape type on the inputter 4 and the input of the dimensions of the second shape HD2 on the inputter 4, determining the second shape HD2 based on the selected first candidate E1 and the input dimensions, by the calculator 2.

### (Determination of Third Value V3)

As in the example illustrated in FIG. 20, the machining path generation method according to embodiment 2 (more specifically, the above-described third step ST3) may include determining the third value V3 indicating the third shrinkage amount of the first elongated member Q1 as a result of the welding in the second welding portion T2 (see FIG. 3).

The shrinkage amount determination process (more specifically, the process of determining the third value V3 indicating the third shrinkage) is performed by the machining path generator 1 (more specifically, the calculator 2) executing the program P based on a user instruction received by the inputter 4. More specifically, the shrinkage amount determination process (third step ST3) includes receiving the fifth input for identifying the third value V3 by the inputter 4 serving as the user interface, and determining the above-described third value V3 by the calculator 2 based on the fifth input. Alternatively, the third value V3 may be automatically determined by the calculator 2.

The shrinkage amount determination process (third step ST3) may include storing the third value V3 determined by the calculator 2 in the memory 3 (see FIG. 22).

In the example illustrated in FIG. 20, the machining path generation method according to embodiment 2 (more specifically, the above-described third step ST3) includes displaying the image IG5 for receiving the fifth input (more specifically, an input of the third data identifying the third value V3) on the display 5. In the example illustrated in FIG. 20, the third image IM3 includes the image IG5 for receiving the fifth input.

In the example illustrated in FIG. 20, the image IG5 for receiving the fifth input includes the seventh window C7 for receiving an input of the third data identifying the third value V3.

The seventh window C7 may be an input window of direct input format for allowing the user to directly input numbers. Alternatively, the seventh window C7 may be an input window of selection format configured for selection of one of a plurality of listed numbers displayed.

### (Creation of First Machining Path Generation Model G1)

In the examples illustrated in FIG. 4 and FIG. 5, FIG. 10 and FIG. 11, or FIG. 17 and FIG. 21, the machining path generation method according to embodiment 2 (more specifically, the above-described fourth step ST4) includes creating the first machining path generation model G1 from the first model M1 by correcting the shape of the first model M1 based at least on the first shape HD1 and the first value V1.

In the examples illustrated in FIG. 17 to FIG. 21, the machining path generation method according to embodiment 2 (more specifically, the above-described fourth step ST4) includes creating the first machining path generation model G1 from the first model M1 by correcting the shape of the first model M1 based at least on the first shape HD1, the first value V1, the second shape HD2, and the third value V3.

### (Creation of Second Machining Path Generation Model G2)

In the examples illustrated in FIG. 10 and FIG. 11 or FIG. 17 and FIG. 21, the machining path generation method according to embodiment 2 (more specifically, the above-described fourth step ST4) includes creating the second machining path generation model G2 from the second model M2 by correcting the shape of the second model M2 based at least on the first shape HD1 and the second value V2.

### (Displaying of Machining Path Generation Model)

In the example illustrated in FIG. 5, FIG. 11, or FIG. 21, the machining path generation method according to embodiment 2 (more specifically, the above-described fourth step ST4) includes displaying the created first machining path generation model G1 on the display 5. In the example illustrated in FIG. 5, FIG. 11, or FIG. 21, the second image IM2 includes an image indicating the shape of the first machining path generation model G1.

In the examples illustrated in FIG. 4 and FIG. 5, FIG. 10 and FIG. 11, or FIG. 17 and FIG. 21, displaying the first machining path generation model G1 on the display 5 includes displaying the first machining path generation model G1 (see FIG. 5, FIG. 11, or FIG. 21) at a position (see FIG. 4, FIG. 10, or FIG. 17) where the first model M1 has been displayed. With the first machining path generation model G1 displayed at the position where the first model M1 has been displayed, the user can easily recognize that the first machining path generation model G1 has been created with the welding shrinkage taken into consideration.

Displaying the first machining path generation model G1 on the display 5 may include displaying the first machining path generation model G1 (see FIG. 11 or FIG. 21) in place of the first model M1 (see FIG. 10 or FIG. 17) to facilitate recognition of the creation of the first machining path generation model G1 with the welding shrinkage taken into consideration. Alternatively, displaying the first machining path generation model G1 on the display 5 may include simultaneously displaying the first machining path generation model G1 and the first model M1 with the first machining path generation model G1 and the first model M1 overlapping.

As in the example illustrated in FIG. 11, the first machining path generation model G1 displayed on the display 5 may include the first interference portion RF1 where the first machining path generation model G1 and the corrected second model M2 (more specifically, the second machining path generation model G2 created by correcting the shape of the second model M2) overlap.

With the first interference portion RF1 displayed on the display 5, the user can easily recognize that the first machining path generation model G1 has been created with the welding shrinkage taken into consideration.

In the example illustrated in FIG. 11 or FIG. 21, the machining path generation method according to embodiment 2 (more specifically, the above-described fourth step ST4) includes simultaneously displaying the first machining path generation model G1 and the second machining path generation model G2 on the display 5. In the example illustrated in FIG. 11 or FIG. 21, the second image IM2 includes an image indicating the shape of the first machining path generation model G1 and an image indicating the shape of the second machining path generation model G2.

In the examples illustrated in FIG. 10 and FIG. 11 or FIG. 17 and FIG. 21, the machining path generation method according to embodiment 2 (more specifically, the above-described fourth step ST4) includes displaying the first machining path generation model G1 at a position where the first model M1 has been displayed, and displaying the second machining path generation model G2 at a position where the second model M2 has been displayed.

As in the examples illustrated in FIG. 10 and FIG. 11, simultaneously displaying the first machining path generation model G1 and the second machining path generation model G2 on display 5 may include displaying the first machining path generation model G1 in place of the first model M1 and displaying the second machining path generation model G2 in place of the second model M2.

As in the examples illustrated in FIG. 17 and FIG. 21, simultaneously displaying the first machining path generation model G1 and the second machining path generation model G2 on display 5 may include displaying the first machining path generation model G1 in place of the first model M1 and displaying the second machining path generation model G2 in place of the second model M2.

### (Generation of Second Machining Path)

The machining path generation process (fifth step ST5) may include generating the second machining path for producing the second elongated member Q2 based on the second machining path generation model G2. The second machining path is already described in embodiment 1. Thus, redundant description on the second machining path will be omitted.

The machining path generation process (fifth step ST5) may include automatically generating the second machining path for producing the second elongated member Q2 by the calculator 2 based on the second machining path generation model G2. The machining path generation process (fifth step ST5) may include storing the second machining path data DP2 indicating the second machining path generated by the calculator 2 in the memory 3 (see FIG. 22).

### (First Wall 8m, First Through Hole Portions 81m, Second Wall 8g, Second Through Hole Portions 81g)

In the example illustrated in FIG. 10 (or FIG. 17), the first model M1 includes the first wall 8m and the first through hole portions 81m provided in the first wall 8m. In the example illustrated in FIG. 11 (or FIG. 21), the first machining path generation model G1 includes the second wall 8g and the second through hole portions 81g provided in the second wall 8g.

The second wall 8g of the first machining path generation model G1 is a wall corresponding to the first wall 8m of the first model M1. The second through hole portions 81g of the first machining path generation model G1 are hole portions corresponding to the first through hole portions 81m of the first model M1. In the examples illustrated in FIG. 10 and FIG. 11 (or FIG. 17 and FIG. 21), the shape of the second through hole portions 81g is the same as the shape of the first through hole portions 81m. In the examples illustrated in FIG. 10 and FIG. 11 (or FIG. 17 and FIG. 21), the positions of the second through hole portions 81g in the first machining path generation model G1 are substantially the same as the positions of the first through hole portions 81m in the first model M1.

The first machining path generated by executing the machining path generation process (fifth step ST5) includes a perforation machining path generated based on the positions of the second through hole portions 81g and the shape of the second through hole portions 81g.

In the example illustrated in FIG. 8, the laser beam machine 101 receiving the control command SA produces the first elongated member Q1 from the first elongated workpiece W1. The laser beam machine 101 receiving the control command SA irradiates the wall 8w of the first elongated workpiece W1 with a laser beam, to form the through hole portions 81h (more specifically, the through hole portions 81h corresponding to the second through hole portions 81g of the first machining path generation model G1) in the wall 8w.

Assume that the through hole portions 81h corresponding to the second through hole portions 81g are formed in the first elongated member Q1, and then the first elongated member Q1 and the second elongated member Q2 are welded in the first welding portion T1. In embodiment 2, the first machining path is generated with the welding shrinkage taken into consideration, meaning that the welding shrinkage in the first welding portion T1 leads to no or little shifting of the positions of the through hole portions 81h from desired positions.

When through hole portions requiring high positional accuracy need to be formed in the first elongated member Q1, conventionally, the through hole portions have been formed in the first elongated member Q1 after the first elongated member Q1 and the second elongated member Q2 are welded. On the other hand, in the laser beam machining method according to embodiment 2, when through hole portions requiring high positional accuracy need to be formed in the first elongated member Q1, the through hole portions can be formed in the first elongated member Q1 before the first elongated member Q1 and the second elongated member Q2 are welded. Thus, the assembly including the first elongated member Q1 and the second elongated member Q2 having the through hole portions requiring high positional accuracy can be produced in a shorter period of time. A huge machine corresponding to the assembly needs not to be used or may be used for a shorter period of time.

### (Laser Beam Machining Method)

The laser beam machining method according to embodiment 2 includes creating the machining program PG. More specifically, after the above-described first step ST1 to fifth step ST5 are executed, in a sixth step ST6, the machining program PG is created. The sixth step ST6 is a machining program creation process.

The machining program creation process (sixth step ST6) includes creating the machining program PG based at least on the first machining path. The machining program creation process (sixth step ST6) may include creating the machining program PG based at least on the first machining path and the second machining path. Any known algorithm can be adopted for an algorithm for creating the machining program PG based on a machining path such as the first machining path.

The machining path generator 1 (more specifically, the calculator 2) executing the program P may create the machining program PG. Alternatively, the controller 7 may create the machining program PG.

When the machining path generator 1 creates the machining program PG, the laser beam machining method according to embodiment 2 includes receiving the machining program PG created by the machining path generator 1, by the controller 7. More specifically, the laser beam machining method according to embodiment 2 includes receiving the machining program PG by the controller 7 from the machining path generator 1.

On the other hand, when the controller 7 creates the machining program PG, the laser beam machining method according to embodiment 2 includes receiving the first machining path data DP1 indicating the first machining path by the controller 7 and creating the machining program PG by the controller 7 based at least on the first machining path.

The laser beam machining method according to embodiment 2 includes generating the control command SA based on the machining program PG. More specifically, in a seventh step ST7 after the execution of the above-described sixth step ST6, the controller 7 executing the machining program PG generates the control command SA. The seventh step ST7 is a control command generation process.

The controller 7 is already described in embodiment 1. Thus, redundant description on the controller 7 will be omitted.

The laser beam machining method according to embodiment 2 includes producing the first elongated member Q1 from the first elongated workpiece W1. More specifically, in an eighth step ST8 after the execution of the above-described seventh step ST7, the laser beam machine 101 receiving the control command SA irradiates the first elongated workpiece W1 with a laser beam to produce the first elongated member Q1 from the first elongated workpiece W1. The eighth step ST8 is an elongated member production process.

The laser beam machine 101 is already described in embodiment 1. Thus, redundant description on the laser beam machine 101 will be omitted.

As in the example illustrated in FIG. 8, the elongated member production process (eighth step ST8) may include forming the through hole portions 81h (more specifically, the through hole portions 81h corresponding to the second through hole portions 81g of the first machining path generation model G1) in the wall 8w of the first elongated workpiece W1 by irradiating the wall 8w with a laser beam by the laser beam machine 101 receiving the control command SA. As in the example illustrated in FIG. 8, when the laser beam machine 101 includes the machining head 140 holding a tool such as the machining tool 141, the elongated member production process (eighth step ST8) may include machining the first elongated workpiece W1 using the tool by the laser beam machine 101 receiving the control command SA.

The laser beam machining method according to embodiment 2 may include producing the second elongated member Q2 from the first elongated workpiece W1 or the second elongated workpiece different from the first elongated workpiece W1. More specifically, the second elongated member Q2 may be produced from the first elongated workpiece W1 or the second elongated workpiece, by irradiating the first elongated workpiece W1 or the second elongated workpiece with a laser beam by the laser beam machine 101 receiving the control command SA.

### (Program P)

The program P according to embodiments is a program for causing the machining path generator 1 or the laser beam machining system 100 to execute the machining path generation method according to embodiment 2.

More specifically, the program P according to embodiments is a program causing the machining path generator 1 or the laser beam machining system 100 to execute the machining path generation method (more specifically, the machining path generation method according to embodiment 2) including: (1) preparing the plurality of models M including the first model M1 obtained by modeling the first elongated member Q1 and the second model M2 obtained by modeling the second elongated member Q2 (in other words, the above-described first step ST1); (2) determining the first shape HD1 as the first positioning shape between the first elongated member Q1 and the second elongated member Q2 in the first welding portion T1 defined as a portion where the first elongated member Q1 and the second elongated member Q2 are to be welded (in other words, the above-described second step ST2); (3) determining the first value V1 indicating the first shrinkage amount of the first elongated member Q1 as a result of the welding in the first welding portion T1 (in other words, the above-described third step ST3); (4) creating the first machining path generation model G1 from the first model M1 by correcting the shape of the first model M1 based at least on the first shape HD1 and the first value V1 (in other words, the above-described fourth step ST4); and (5) generating the first machining path for producing the first elongated member Q1 based on the first machining path generation model G1 (in other words, the above-described fifth step ST5).

The machining path generation method according to embodiment 2 is already described. Thus, redundant description on the machining path generation method according to embodiment 2 will be omitted.

The program P may include a plurality of sub-programs. For example, the program P may include a sub-program for executing the above-described first step ST1 (preparation process), the above-described second step ST2 (shape determination process), and the above-described third step ST3 (shrinkage amount determination process); a sub-program for executing the above-described fourth step ST4 (machining path generation model creation process); and a sub-program for executing the above-described fifth step ST5 (machining path generation process).

The program P may include a program for executing the above-described sixth step ST6 (machining program creation process). In other words, the program P according to embodiments may be a program causing the machining path generator 1 or the laser beam machining system 100 to perform a machining program creation method including the above-described first step ST1 to sixth step ST6.

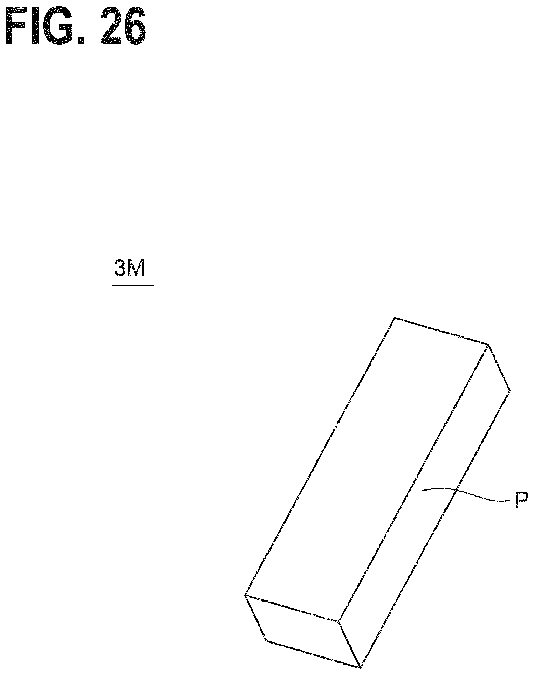

The memory 3 according to embodiment 1 may be a non-volatile storage medium in which the above-described program P is recorded. The non-volatile storage medium in which the above-described program P is recorded may be a portable storage medium 3M as in an example illustrated in FIG. 26.

The program P according to embodiments provides the same effects as the machining path generation method according to embodiment 2 when executed by the machining path generator 1 or the laser beam machining system.

### (Plurality of Elongated Members Q)

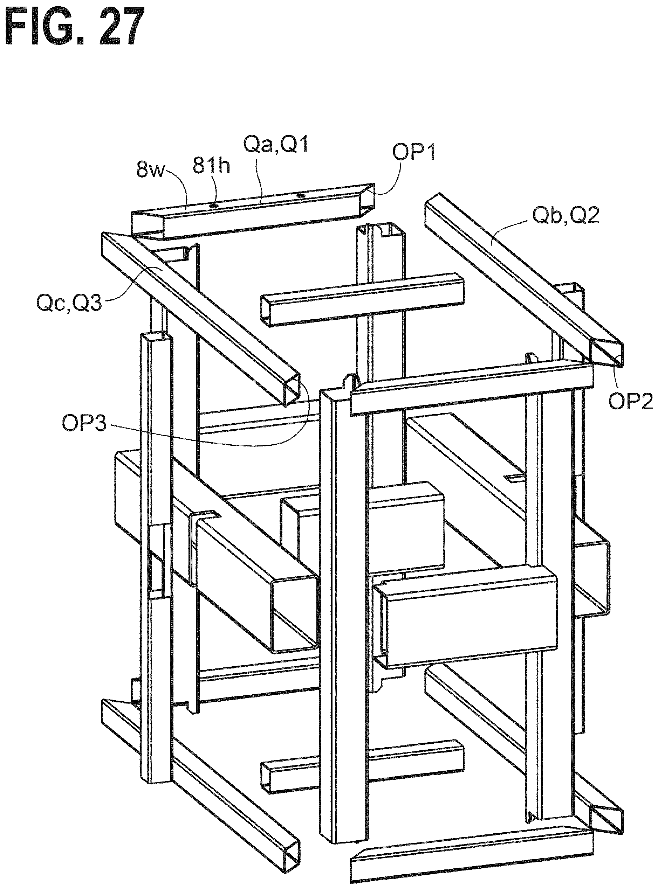

FIG. 27 schematically illustrates a plurality of elongated members produced using the laser beam machining system 100A according to embodiment 1 or the laser beam machining method according to embodiment 2.

In the example illustrated in FIG. 27, the first elongated member Q1 is a first pipe Qa. Thus, in this specification, the "first elongated member" can be replaced with a "first pipe". In this specification, the "first model" can be replaced with a "first pipe model". The first pipe Qa is, for example, hollow and is made of metal. The first pipe Qa is, for example, a rectangle pipe (note that the rectangle includes square). In other words, the first pipe Qa has a rectangular shape in a cross section orthogonal to the longitudinal direction of the first pipe Qa. In the example illustrated in FIG. 27, end portions of the first pipe Qa have first end portion openings OP1.

In the example illustrated in FIG. 27, the second elongated member Q2 is a second pipe Qb. Thus, in this specification, the "second elongated member" can be replaced with a "second pipe". In this specification, the "second model" can be replaced with a "second pipe model". The second pipe Qb is, for example, hollow and is made of metal. The second pipe Qb is, for example, a rectangle pipe. In other words, the second pipe Qb has a rectangular shape in a cross section orthogonal to the longitudinal direction of the second pipe Qb. In the example illustrated in FIG. 27, end portions of the second pipe Qb have second end portion openings OP2.

In the example illustrated in FIG. 27, the third elongated member Q3 is a third pipe Qc. Thus, in this specification, the "third elongated member" can be replaced with a "third pipe". In this specification, the "third model" can be replaced with a "third pipe model". The third pipe Qc is, for example, hollow and is made of metal. The third pipe Qc is, for example, a rectangle pipe. In other words, the third pipe Qc has a rectangular shape in a cross section orthogonal to the longitudinal direction of the third pipe Qc. In the example illustrated in FIG. 27, end portions of the third pipe Qc have third end portion openings OP3.

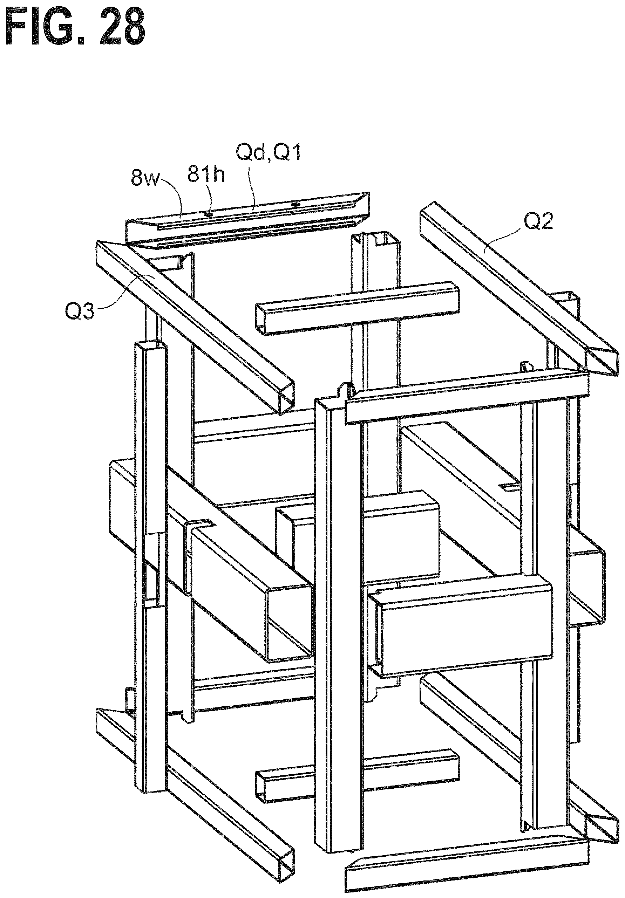

In the example illustrated in FIG. 28, the first elongated member Q1 is a C-shaped channel member Qd. Thus, in this specification, the "first elongated member" can be replaced with a "C-shaped channel member". In this specification, the "first model" can be replaced with a "C-shaped channel member model". The C-shaped channel member Qd is, for example, made of metal. The C-shaped channel member Qd has a substantially C-shape in a cross section orthogonal to the longitudinal direction of the C-shaped channel member.

Alternatively, the first elongated member Q1 may be an elongated member with an H-shaped cross section (in other words, an H-shaped elongated member). Thus, in this specification, the "first elongated member" can be replaced with an "H-shaped elongated member". In this specification, the "first model" can be replaced with an "H-shaped elongated member model".

Alternatively, the first elongated member Q1 may be an elongated member other than the first pipe, the C-shaped channel member, or the H-shaped elongated member.

The second elongated member Q2 may be a C-shaped channel member, may be an H-shaped elongated member, or may be an elongated member of another shape.

The third elongated member Q3 may be a C-shaped channel member, may be an H-shaped elongated member, or may be an elongated member of another shape.

In the examples illustrated in FIG. 4, FIG. 9, and FIG. 16, in the assembly model AM, the extending direction of the first model M1 and the extending direction of the second model M2 form an angle of 90 degrees. In other words, the first elongated member Q1 and the second elongated member Q2 are welded with the extending direction of the first elongated member Q1 and the extending direction of the second elongated member Q2 forming an angle of 90 degrees.

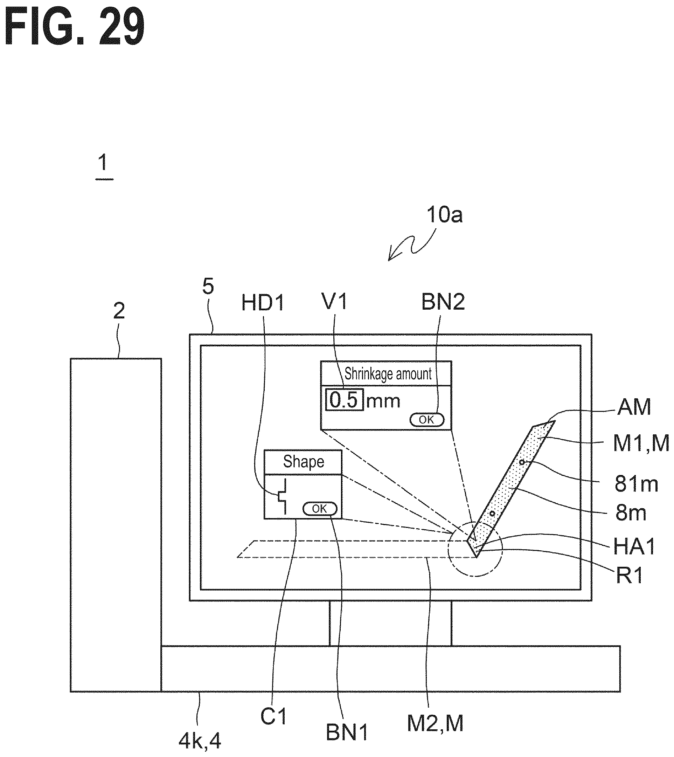

Alternatively, as in an example illustrated in FIG. 29, in the assembly model AM, the extending direction of the first model M1 and the extending direction of the second model M2 may form an angle larger than 90 degrees. In other words, the first elongated member Q1 and the second elongated member Q2 may be welded with the extending direction of the first elongated member Q1 and the extending direction of the second elongated member Q2 forming an angle larger than 90 degrees.

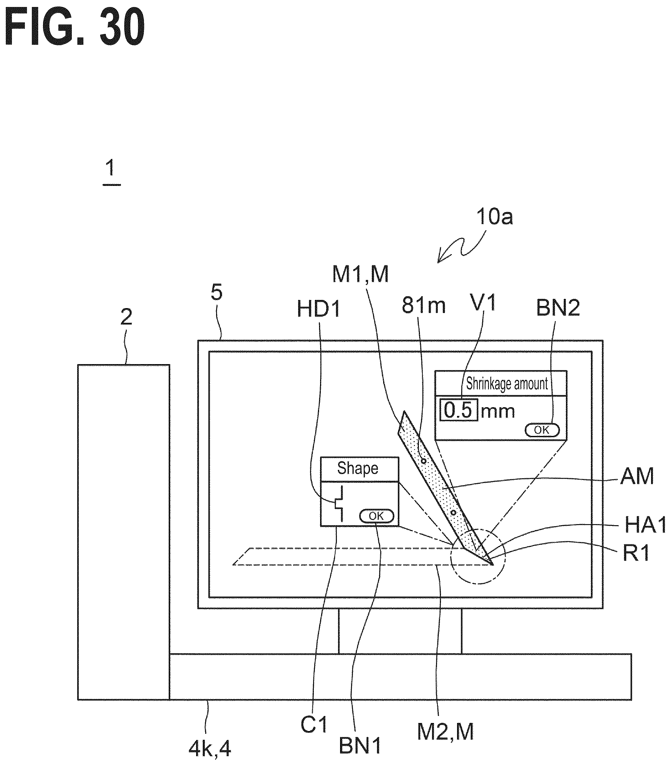

Alternatively, as in an example illustrated in FIG. 30, in the assembly model AM, the extending direction of the first model M1 and the extending direction of the second model M2 may form an angle smaller than 90 degrees. In other words, the first elongated member Q1 and the second elongated member Q2 may be welded with the extending direction of the first elongated member Q1 and the extending direction of the second elongated member Q2 forming an angle smaller than 90 degrees.

Alternatively, in the assembly model AM, the first model M1 and the second model M2 may be linearly arranged. In other words, the first elongated member Q1 and the second elongated member Q2 may be welded with the first elongated member Q1 and the second elongated member Q2 linearly arranged.

The present invention is not limited to the embodiments or modifications described above. It is a matter of course that the embodiments and modifications can be deformed or modified within the scope of the technical idea of the present invention. Various techniques used in the embodiments and modifications are applicable to other embodiments and modifications unless any technical contradiction arises. Furthermore, optional configurations in the embodiments and modifications can be omitted as appropriate.

### Description of the Reference Numeral

1, 1A ... Machining path generator, 2 ... Calculator, 2a ... Processor, 3 ... Memory, 3M ... Storage medium, 4 ... Inputter, 4k ... Keyboard, 4p ... Pointer, 5 ... Display, 6 ... Communication circuit, 7 ... Controller, 8g ... Second wall, 8m ... First wall, 8w ... Wall, 10a ... CAM device, 15 ... Bus, 21 ... Machining path generation model creation unit, 23 ... Machining path generation unit, 72 ... Display, 73 ... Inputter, 74 ... Calculator, 75 ... Communication circuit, 76 ... Memory, 77 ... Bus, 81g ... Second through hole portion, 81h ... Through hole portion, 81m ... First through hole portion, 91 ... CAD device, 100, 100A ... Laser beam machining system, 101 ... Laser beam machine, 103 ... Carry-in part, 105 ... Laser beam machining unit, 107 ... Carry-out part, 110 ... Laser beam emitter, 111 ... Laser head, 112 ... Laser beam emission port, 113 ... Laser beam light source, 115 ... Optical component, 120 ... Mover, 121 ... First mover, 122a ... First moving body, 122b ... First driver, 123a ... Second moving body, 123b ... Second driver, 130 ... Workpiece supporter, 131 ... First chuck, 132 ... Holding member, 134 ... Second chuck, 135 ... Guide roller, 137 ... Rotational driver, 140 ... Machining head, 141 ... Machining tool, AM ... Assembly model, B ... Boundary region, B1 ... Shape corrected boundary region, B2 ... Shape not-corrected boundary region, BN1 ... First button, BN2 ... Second button, BN3 ... Third button, BN4 ... Fourth button, BN5 ... Fifth button, C1 ... First window, C2 ... Second window, C3 ... Third window, C4 ... Fourth window, C5 ... Fifth window, C6 ... Sixth window, C7 ... Seventh window, DA... Shape data of plurality of models, DA1 ... Shape data of first model, DA2 ... Shape data of second model, DA3 ... Shape data of third model, DB1 ... Shape data of first machining path generation model, DB2 ... Shape data of second machining path generation model, DP1 ... First machining path data, DP2 ... Second machining path data, Ds ... Shape identification data identifying first shape, Dt ... Shape identification data identifying second shape, E1 ... First candidate of shape type, E2 ... Second candidate of shape type, F ... File, G1 ... First machining path generation model, Ge ... Part of end surface of first machining path generation model, G2 ... Second machining path generation model, HA1 ... Original shape of first portion, HA2 ... Original shape of second portion, HA3 ... Original shape of third portion, HB1 ... Corrected shape of first portion, HB2 ... Corrected shape of second portion, HB3 ... Corrected shape of third portion, HD1 ... First shape, HD2 ... Second shape, IG1 ... Image for receiving first input, IG2 ... Image for receiving second input, IG3 ... Image for receiving third input, IG4 ... Image for receiving fourth input, IG5 ... Image for receiving fifth input, IM1 ... First image, IM2 ... Second image, IM3 ... Third image, J ... Highlighting portion, LN ... Wire, M ... Model, M1 ... First model, M2 ... Second model, M3 ... Third model, OP1 ... First end portion opening, OP2 ... Second end portion opening, OP3 ... Third end portion opening, P ... Program, PG ... Machining program, PJ ... Calculation program, Q ... Elongated member, Q1 ... First elongated member, Q2 ... Second elongated member, Q3 ... Third elongated member, Qa ... First pipe, Qb ... Second pipe, Qc ... Third pipe, Qd ... C-shaped channel member, R1 ... First portion, R2 ... Second portion, R3 ... Third portion, RF1 ... First interference portion, RF2 ... Second interference portion, SA ... Control command, SA1 ... Movement command, SA2 ... Emission command, SP1 ... Work room, SP2 ... Office space, T1 ... First welding portion, T2 ... Second welding portion, V1 ... First value, V2 ... Second value, V3 ... Third value, Vc ... Recommended value, W ... Elongated workpiece, W1 ... First elongated workpiece

## Claims

1. A machining path generation method comprising:
preparing a plurality of models including a first model obtained by modeling a first elongated member and a second model obtained by modeling a second elongated member;
determining a first shape as a first positioning shape between the first elongated member and the second elongated member at a first welding portion defined as a portion where the first elongated member and the second elongated member are to be welded;
determining a first value indicating a first shrinkage amount of the first elongated member as a result of the welding at the first welding portion;
creating a first machining path generation model from the first model by correcting a shape of the first model based at least on the first shape and the first value; and
generating a first machining path for producing the first elongated member based on the first machining path generation model.

2. The machining path generation method according to claim 1,
wherein the correcting the shape of the first model with a portion of the first model corresponding to the first welding portion defined as a first portion comprises:
deforming a shape of the first portion into a shape conforming to the first shape; and
increasing a length of the first model based at least on the first value.

3. The machining path generation method according to claim 1 or 2,
wherein the determining the first shape comprises:
receiving, by an inputter serving as a user interface, a first input for identifying the first shape; and
determining, by a calculator, the first shape based on the first input.

4. The machining path generation method according to claim 1 or 2,
wherein the determining the first value comprises:
receiving, by an inputter serving as a user interface, a second input for identifying the first value; and
determining, by a calculator, the first value based on the second input.

5. The machining path generation method according to claim 3,
wherein the determining the first value comprises:
receiving, by the inputter, a second input for identifying the first value; and
determining, by the calculator, the first value based on the second input.

6. The machining path generation method according to any one of claims 1 to 5, further comprising:
determining a second value indicating a second shrinkage amount of the second elongated member as a result of the welding at the first welding portion;
generating a second machining path generation model from the second model by correcting a shape of the second model based at least on the first shape and the second value; and
generating a second machining path for producing the second elongated member based on the second machining path generation model.

7. The machining path generation method according to any one of claims 1 to 6,
wherein the first model includes a first wall and a first through hole portion provided in the first wall,
wherein the first machining path generation model includes a second wall corresponding to the first wall and a second through hole portion that is provided in the second wall and corresponds to the first through hole portion, and
wherein the first machining path includes a perforation machining path generated based on a position of the second through hole portion and a shape of the second through hole portion.

8. The machining path generation method according to any one of claims 1 to 7, further comprising displaying the first machining path generation model on a display.

9. The machining path generation method according to claim 8, wherein the displaying the first machining path generation model on the display comprises displaying the first machining path generation model at a position where the first model position has been displayed.

10. The machining path generation method according to any one of claims 1 to 5, further comprising displaying the first machining path generation model on a display,
wherein the first machining path generation model displayed on the display includes a first interference portion where the first machining path generation model overlaps a second machining path generation model created by correcting a shape of the second model.

11. The machining path generation method according to any one of claims 1 to 7, further comprising:
displaying an assembly model that is a combination of the plurality of models on a display;
upon selection of the first model in the assembly model displayed on the display, highlighting the first model in the assembly model displayed on the display; and
upon designation of a portion corresponding to the first welding portion in the selected first model, displaying, on the display, an image for receiving an input of at least one of information for determining the first shape and information for determining the first value.

12. The machining path generation method according to any one of claims 1 to 11, further comprising:
determining a second shape as a second positioning shape between the first elongated member and a third elongated member in a second welding portion defined as a portion where the first elongated member and the third elongated member are to be welded; and
determining a third value indicating a third shrinkage amount of the first elongated member as a result of the welding in the second welding portion,
wherein the creating the first machining path generation model comprises creating the first machining path generation model from the first model by correcting the shape of the first model, based at least on the first shape, the first value, the second shape, and the third value.

13. A laser beam machining system comprising:
a machining path generator configured to execute preparation processing of preparing a plurality of models including a first model obtained by modeling a first elongated member and a second model obtained by modeling a second elongated member, first determination processing of determining a first shape as a first positioning shape between the first elongated member and the second elongated member at a first welding portion defined as a portion where the first elongated member and the second elongated member are to be welded, second determination processing of determining a first value indicating a first shrinkage amount of the first elongated member as a result of the welding at the first welding portion, first creation processing of creating a first machining path generation model from the first model by correcting a shape of the first model based at least on the first shape and the first value, and first generation processing of generating a first machining path for producing the first elongated member based on the first machining path generation model;
a controller configured to generate a control command by executing a machining program created based at least on the first machining path and transmit the generated control command to a laser beam machine; and
the laser beam machine configured to operate based on the control command to produce the first elongated member from a first elongated workpiece by irradiating the first elongated workpiece with a laser beam.

14. A program for causing a machining path generator or a laser beam machining system to execute the machining path generation method according to any one of claims 1 to 12.

15. A laser beam machining method comprising:
preparing a plurality of models including a first model obtained by modeling a first elongated member and a second model obtained by modeling a second elongated member;
determining a first shape as a first positioning shape between the first elongated member and the second elongated member at a first welding portion defined as a portion where the first elongated member and the second elongated member are to be welded;
determining a first value indicating a first shrinkage amount of the first elongated member as a result of the welding at the first welding portion;
creating a first machining path generation model from the first model by correcting a shape of the first model based at least on the first shape and the first value;
generating a first machining path for producing the first elongated member based on the first machining path generation model;
creating a machining program based at least on the first machining path;
generating a control command by a controller that executes the machining program; and
producing the first elongated member from a first elongated workpiece by irradiating the first elongated workpiece with a laser beam by a laser beam machine that receives the control command.
